(19) Europäisches Patentamt
European Patent Office
Office européen des brevets

(11) Publication number: **0 422 218 A1**

(12) **EUROPEAN PATENT APPLICATION published in accordance with Art. 158(3) EPC**

(21) Application number: 88908387.9

(22) Date of filing: 30.09.88

(86) International application number: PCT/JP88/01001

(87) International publication number: WO 89/02939 (06.04.89 89/08)

(51) Int. Cl.[5]: **D01F 6/62**, D01F 6/84, D01F 8/10, D01F 8/14, D01F 8/16, C08J 5/00

(30) Priority: 01.10.87 JP 248295/87
07.10.87 JP 253122/87

(43) Date of publication of application: 17.04.91 Bulletin 91/16

(84) Designated Contracting States: AT BE CH DE FR GB IT LI LU NL SE

(71) Applicant: TORAY INDUSTRIES, INC.
2-1, Nihonbashi Muromachi 2-chome
Chuo-ku
Tokyo 103(JP)

(72) Inventor: UMEZAWA, Masao
171-32, Kobirai Ritto-cho
Kurita-gun Shiga-ken 520-30(JP)
Inventor: KOTERA, Yasukazu
1276-6, Shimogasa-cho
Kusatsu-shi Shiga 525(JP)

(74) Representative: Coleiro, Raymond et al
MEWBURN ELLIS & CO. 2/3 Cursitor Street
London EC4A 1BQ(GB)

(54) **HIGH-STRENGTH LIQUID CRYSTAL RESIN MOLDINGS, LIQUID CRYSTAL RESIN COMPQSITES, AND PRQCESSES FOR THEIR PRODUCTION.**

(57) Advanced reinforced materials, base materials for the advanced materials, and processes for their production are disclosed. More particularly, the present invention is related to (1) high-strength liquid crystal resin moldings having a specific surface area as 0.29 $m^2/g$ or above, (2) liquid resin composites composed of liquid crystal resins and non-liquid crystal resins, wherein the liquid crystal resins are in fibrous form in the non-liquid crystal resins, (3) colored liquid crystal resin moldings and liquid crystal resin composites, (4) antistatic liquid crystal resin moldings and liquid crystal resin composites, (5) infusibilized liquid crystal resin moldings and liquid crystal resin composites, and processes for their production, and (6) processes for rapid solid-phase polymerization for producing the liquid crystal resin moldings and liquid crystal resin composites using organophosphorus compounds.

EP 0 422 218 A1

# HIGH-STRENGTH LIQUID CRYSTAL MOLDINGS AND LIQUID CRYSTAL RESIN COMPOSITES, AND METHODS FOR PRODUCING THEM.

## Technical Field of the Invention

The present invention relates to high-strength materials, advanced composites, base materials for advanced composites, and methods for producing them.

## Background Art

High-functionality resins have recently come into wide use. Major ones include liquid-crystal-forming resins such as aramid resins.

Aramid resins require high molding costs because the melt-molding technique cannot be applied to them. They have many other disadvantages such as limits to the shape of their moldings.

Contrary to this, liquid crystalline polyesters, which can form liquid crystals, have the great advantage that the melt-molding technique can be applied to them. However, they have many disadvantages as well. As-melt-molded liquid crystalline resins, for instance, are low in strength and when molded into fibers, in particular, only a low spinning rate can be applied as compared with conventional polymers. Moreover, it is impossible to spin them into fine fibers.

To provide high-strength liquid crystalline moldings, it is necessary to carry out lengthy heat treatment after the melt-molding process, leading to high production costs.

Needless to say, melt-moldable liquid crystalline resins may melt after being molded. This also represents an undesirable aspect of these resins.

Aramid and other melt-moldable liquid crystalline resins are widely used not only independently but also as reinforcement for other resins. However, many problems may occur when fibers produced from these resins are used as reinforcement. Major problems are as described below.

(a) Adequate adhesion between the reinforcing fiber and matrix resin cannot be obtained, leading to a low strength of the resultant composite.

(b) The matrix resin may not easily permeate into the reinforcing fiber aggregate. It is often difficult to achieve a uniform strength across the composite. Thus, high reliability cannot be assured in applying these resins to structural or other materials.

In addition, they are poor in coloring properties and antistatic properties.

Thus, they have many disadvantages, although they are high in strength and elastic modulus.

The objectives of the invention are as follows:

(a) To provide liquid crystalline resin moldings which can be produced rapidly by a solid-phase process, and to provide methods for producing them.

(b) To provide very fine liquid crystalline fibers, and to provide methods for producing them.

(c) To provide high-strength liquid crystalline moldings, high-strength liquid crystalline resin composites, and methods for producing them.

(d) To provide methods for rapid production of high-strength liquid crystalline resin moldings and high-strength liquid crystalline resin composites.

(e) To provide infusible liquid crystalline resin moldings and infusible liquid crystalline resin composites, and to provide methods for producing them.

(f) To provide colored liquid crystalline resin moldings and colored liquid crystalline resin composites.

(g) To provide liquid crystalline resin moldings and liquid crystalline resin composites which have antistatic properties.

There have been many attempts made to achieve these objectives. Major ones are as listed below.

Japanese Patent Application No. 177212 of 1987.

This relates to techniques which are designed to eliminate solid-phase polymerization of spinned fiber by increasing the polymerization degree of the liquid crystalline resin during the spinning process.

Japanese Patent Application No. 289178 of 1986.

This relates to techniques which are designed to shorten the solid-phase polymerization process by adding a special metal salt and a special surface active agent.

Japanese Patent Application No. 26656 of 1986.

This relates to techniques which are designed to reinforce thermoplastic resin with liquid crystalline resin by blending the thermoplastic resin with the liquid crystalline resin in their molten stat.

Japanese Patent Gazette No. 59350 of 1986.

This relates to methods for producing composite materials comprising special sea-island fiber which contains polyethylene terephthalate as reinforcing component.

Though many attempts have been made as stated above to provide improved liquid crystalline moldings and improved composites consisting of liquid crystalline resin combined with other resin, such materials have significant disadvantages as described below.

Japanese Patent Application No. 177212 of 1987.

Polymerization during the spinning process requires troublesome process control operations and also requires a high melt viscosity at the fiber portion which is being spinned. Consequently, efficient spinning would be impossible.

Japanese Patent Application No. 289178 of 1986.

Special treatment is required.

Japanese Patent Application No. 26656 of 1986.

This involves polymer blends. It is impossible to produce a blend which is completely uniform at the microscopic level. Thus, products with stable properties cannot be obtained.

Japanese Patent Gazette No. 59350 of 1986.

Polyethylene terephthalate is low in strength and elastic modulus. If this resin is used to reinforce other resins, the resultant products would have limited applications.

The present inventors have achieved this invention after making earnest efforts to solve these problems.

## Description of the Invention

The present invention consists of the following parts.

(1) High-strength liquid crystalline resin moldings which comprise either a liquid crystalline polyester resin or a liquid crystalline polyester amide resin whose backbone contains such a mesogenic group as described below, and which are $0.29m^2/g$ or more in specific surface area and $63kg/mm^2$ or more in strength.

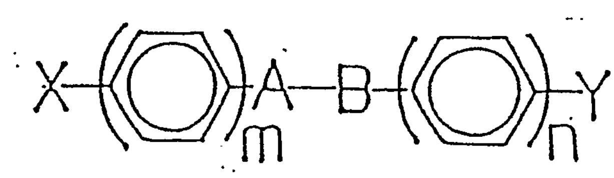

where X and Y represent such end groups as alkyl, alkoxy and cyano, and A-B denotes such a unit as described below.

$-CH=N-$ $-N=N-$ 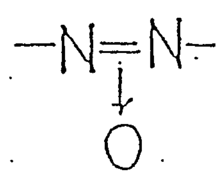 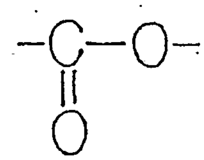

The large specific surface area of these moldings makes it possible to largely increase the rate of solid-ophase polymerization of the liquid crystalline resins.

There no specific requirements for the form of the high-strength liquid crystalline resin moldings as used herein. They include virtually all forms that can be produced by molding melts, including such fibers as very fine fibers, fibrilar fibers, hollow fibers, and porous fibers, as well as ordinary films, porous films, and three-dimensional moldings. The materials may be made up of a liquid crystalline resin alone or may be composites. An appropriate form should be identified to meet specific purposes and applications. In particular, these materials can be extremely high in strength and elastic modulus when they are in the form of very fine fiber.

(2) High-strength liquid crystalline resin moldings as specified under (1) which are 189kg/mm$^2$ or more in strength, and methods for producing them.

Moldings with this level of strength can be applied in a wide variety of fields. When in the form of very fine fibers, in particular, they can serve effectively as reinforcing fiber.

(3) High-strength liquid crystalline resin composites which consist of at least a liquid crystalline resin and a non-liquid crystalline thermoplastic resin such as nylon 66, polyethylene terephthalate, polyethylene sulfide or polypropylene, with the liquid crystalline resin being in the form of fiber in the resin composite, and with the coefficient of variation in the weight ratio between the liquid crystalline resin and the non-liquid crystalline resin being 10 percent or less in any cross section of the resin composite.

The resin composites as proposed herein at least comprise a liquid crystalline resin and a non-liquid crystalline resin, with the liquid crystalline resin being in the form of fiber and being contained in the non-liquid crystalline. Needless to say, the liquid crystalline resin may also exist on the surface of the resin composite.

There are no specific requirements for the form of the resin composites as proposed herein. They may be in any form such as fiber, chips, flakes, blocks, and film. An appropriate form may be selected to meet specific applications.

With such a structure, these composites can be very high in strength, with the liquid crystalline resin reinforcing the non-liquid crystalline resin. The liquid crystalline resin may be coated with the non-liquid crystalline resin. Such a structure has the great advantage that faults of the liquid crystalline resin can be offset by other resin. There are no specific requirements for the properties of the non-liquid crystalline resins as used herein if they can be melt-molded with a liquid crystalline resin. Desirable ones include thermoplastic nylons such as nylon 66; thermoplastic polyesters such as polyethylene terephthalate; polypropylene; sulfur-containing aromatic resins such as polyphenylene sulfide; aromatic ether resins; aromatic ether-ketone resins; and thermoplastic fluoropolymers.

(4) Liquid crystalline resin composite molding methods in which several streams of a liquid crystalline resin (core component) are combined which an intermediate material (intermediate component) are supplied to between the streams to produce a multicore composite flow, which is then subjected to a melt-molding process.

(A) Liquid crystalline resin composite molding methods as proposed under (4) in which the multicore

composite flow has a sea-island structure.

(B) Liquid crystalline resin composite molding methods as proposed under (A) in which the intermediate component forms sheeths to produce many core-sheeth streams, which are then combined into a sea-island composite flow.

(C) High-strength resin composite production methods in which several streams of a liquid crystalline resin (core component) are combined into a multicore composite flow, which is then subjected to a melt-molding process, followed by heat treatment.

(D) High-strength liquid crystalline resin moldings production methods in which several streams of a liquid crystalline resin (core component) are combined while an intermediate material (intermediate component) is supplied to between them to form a multicore composite flow, which is then subjected to a melt-molding process, followed by the removal of the intermediate component. (Heat treatment may be performed after spinning.)

The use of these methods makes it possible to produce steadily and efficiently materials as proposed under (1)-(3) above.

In particular, materials that are high not only in strength but also in elastic modulus can be produced in many cases by carrying out high temperature treatment for solid-phase polymerization after a melt-molding process as proposed herein. As compared with this, when conventional material produced by the melt-molding of a liquid crystalline resin alone is polymerized in a solid phase, its elastic modulus tends to decrease after showing a maximum, although its strength may increase with increasing degree of polymerization. The methods as proposed herein are the first to produce materials which show a maximum of the strength and a maximum of the elastic modulus at the same polymerization degree.

(5) Methods for producing infusible liquid crystalline resin moldings and liquid crystalline resin composites in which liquid crystalline resin moldings and/or liquid crystalline resin composites which contain and/or carry on its surface at least one of the three metals of iron, chromium and cobalt and/or their compounds. These methods serve to make the liquid crystalline resin or the liquid crystalline resin composite infusible. This means that the material can be made infusible after the melt-molding process, leading to the great advantages that material with increased heat resistance can be produced and that various shapes of material can be produced easily.

(6) Liquid crystalline resin moldings and liquid crystalline resin composites which comprise at least one liquid crystalline resin, contain internally and/or carry externally an electrically conductive material, and have a specific electric resistance of $10 \Omega \cdot cm$ or less, and methods for producing them.

Such electrically conductive materials include currently known carbon black materials, stannic oxide, and various other materials. From a liquid crystalline resin, high-strength material can be produced without stretching. Furthermore, being high in elastic modulus and consequently resistant to deformation, they can be easily increased in electric conductivity. Thus, they can be useful for a variety of electrostatic and conductive applications which cannot be met by the conventional liquid crystalline resins.

(7) Colored liquid crystalline resins, and composites which comprise colored liquid crystalline resins.

Conventional coloring matters can be useful to color them. In particular, they should preferably be colored with a dope-dyeing pigment which is resistant to high temperature.

It is difficult to color conventional high-strength, high-elasticity materials including carbon fibers. By means of the present invention, however, beautifully colored high-strength, high-elasticity materials can be produced easily.

(8) Methods for producing high-strength liquid crystalline resins and/or liquid crystalline resin composites in which an organic phosphorus compound as illustrated below is added to a molded liquid crystalline polyester and/or a molded liquid crystalline polyester amide, followed by high temperature treatment of the molded liquid crystalline resin or the liquid crystalline resin composite.

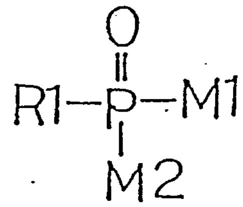

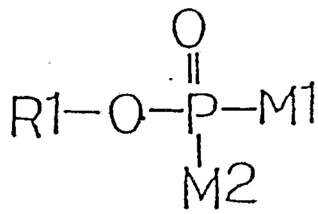

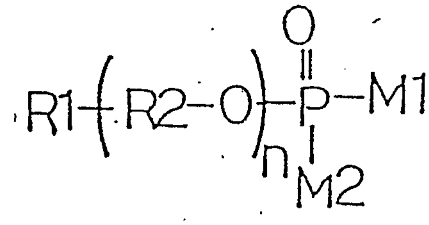

where, R1 and R2 represent a hydrocarbon, M1 an alkali metal, and M2 one of the following.

(a) an alkali metal,

(b) hydrogen,

(c) hydrocarbon,

(d) oxygen-containing hydrocarbon. In the above formulae, n denotes an integer equal to or greater than one.

The strength and elastic modulus of a liquid crystalline resin can be easily increased by polymerizing it in a solid phase using such an assisting agent. In particular, these agents increase the solid-phase polimerization rate of a liquid crystalline resin composite. Since they are surface active agents, they can be easily blended with a liquid crystalline resin and require less costs.

Best Form for the Implementation of the Invention

First, major features of the liquid crystalline resins as proposed herein are outlined. The TLCPs as proposed herein ar thermoplastic, liquid-crystal-forming polymers. Specifically, these liquid crystalline resins contain the mesogenic group in their backbone.

These liquid crystalline resins can be roughly categorized into two groups: those comprising a liquid crystalline polyester and those comprising a liquid crystalline polyester amide.

There are no speicifc requirements for the structure of such resins comprising a liquid crystalline polyester and virtually all conventionally known ones can be applied.

Particularly desirable liquid crystalline polyesters include those which comprise such a structural unit as illustrated below:

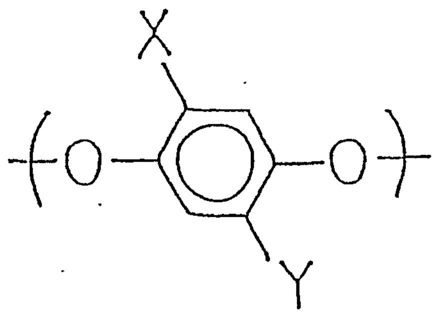

where X and Y each independently is hydrogen, a halogen, or an alkyl group comprising four or less carbon atoms.

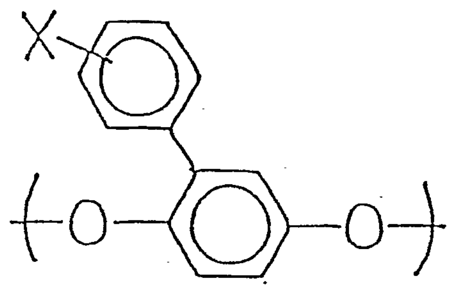

where X is hydrogen, a halogen, or an alkyl group comprising four or less carbon atoms.

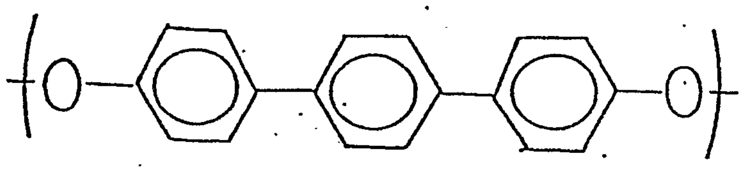

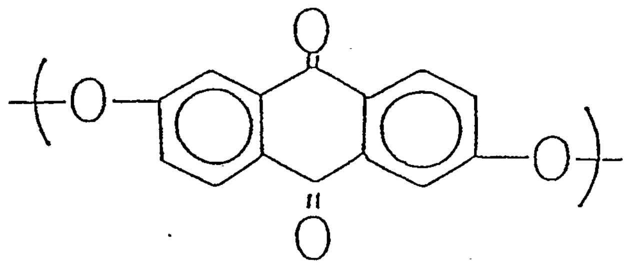

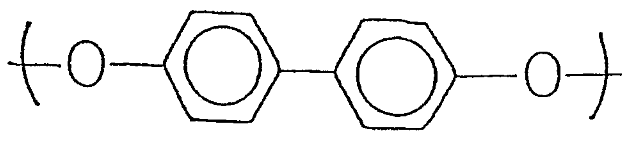

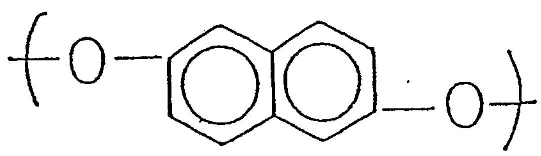

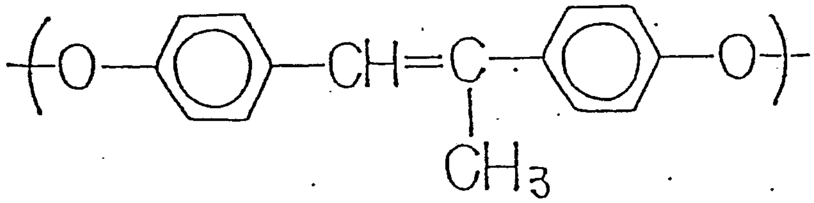

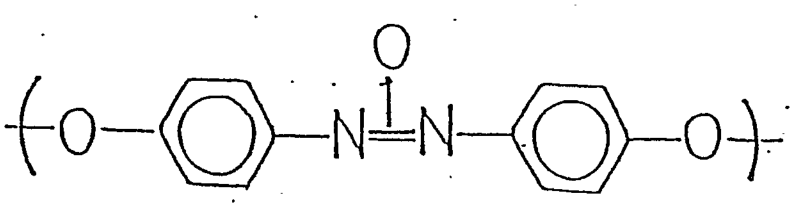

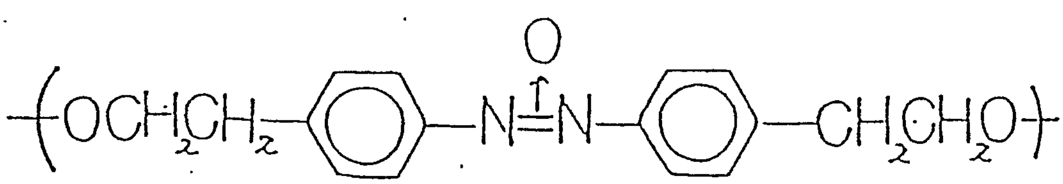

Useful structural units which are derived from a dicarboxylic acid include the following.

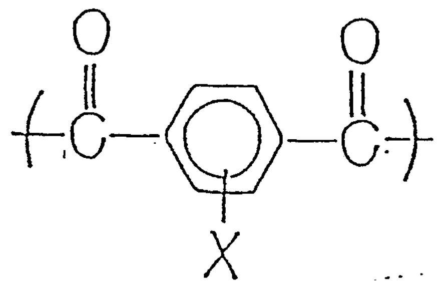

where X is hydrogen, a halogen, or an alkyl group comprising four or less carbon atoms.

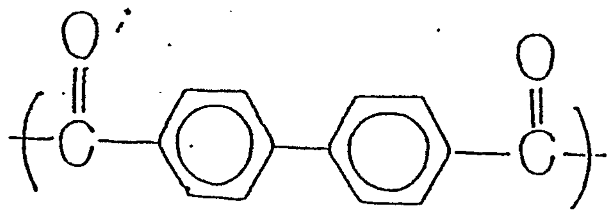

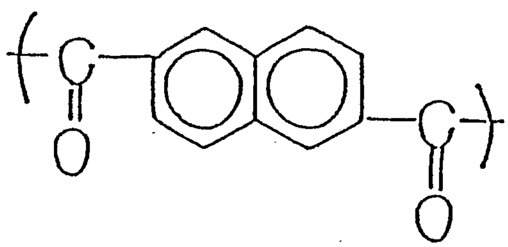

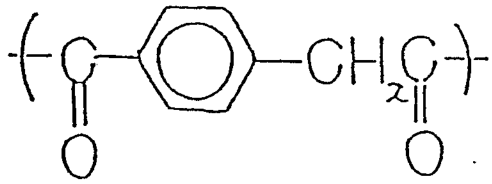

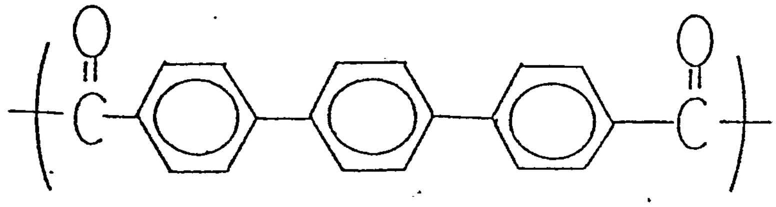

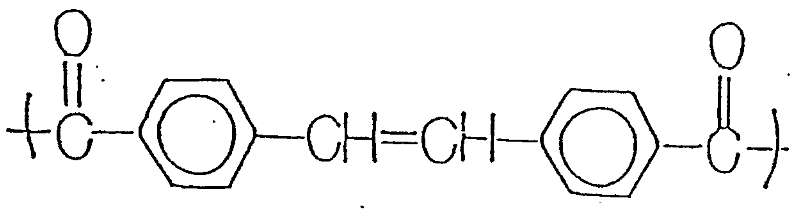

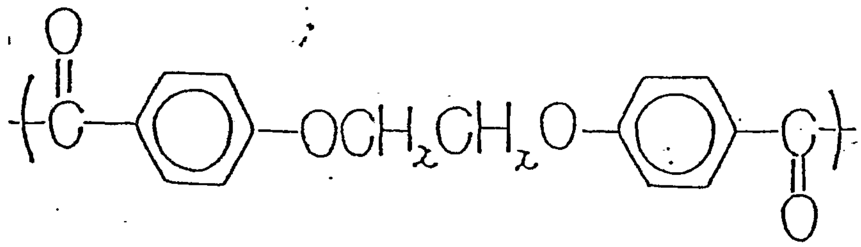

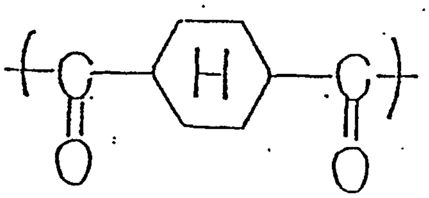

Furthermore, useful structural units which are derived from a hydroxy-carboxylic acid include the following.

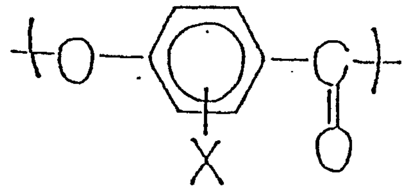

where X is hydrogen, a halogen, or an alkyl group comprising four or less carbon atoms.

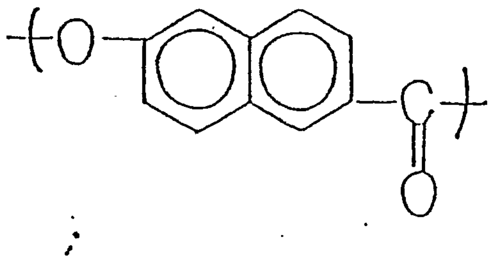

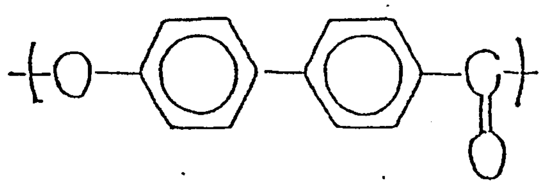

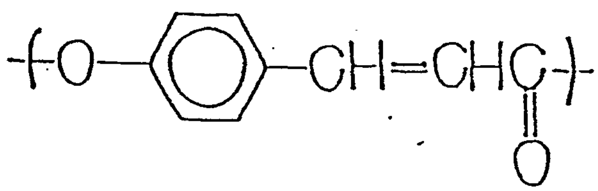

The liquid crystalline resins as proposed herein may also contain the following structural units for the adjustment of their melting point.

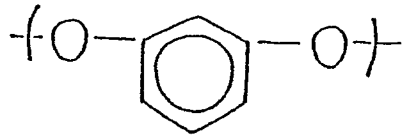

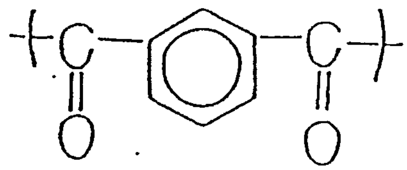

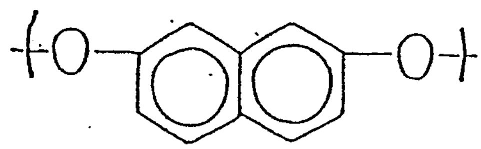

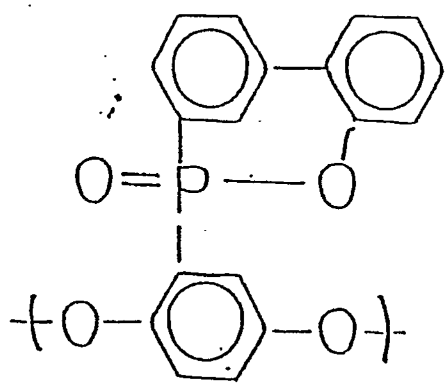

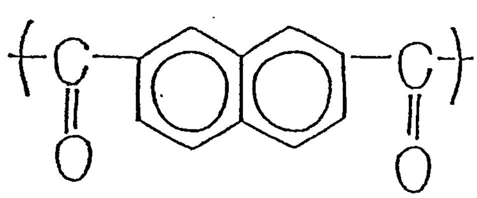

They may also contain structural units which are expressed by the following general formulae.

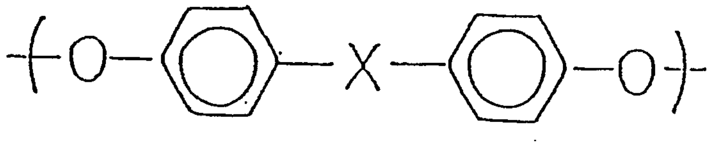

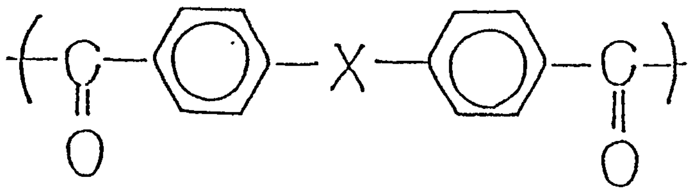

where X is one of the following.

$$O,\ CH_2,\ S,\ SO_2,\ C(CH_3)_2$$

$$-(O-(CH_2)_m-O)- \quad -(CO-(CH_2)_n-CO)-$$

where m and n each independently is an integer between 2 and 10 inclusive.

Particularly desirable liquid crystalline polyesters include the following.

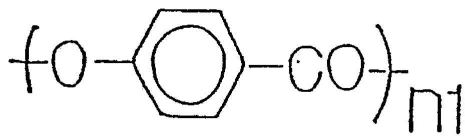

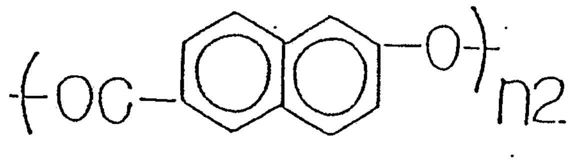

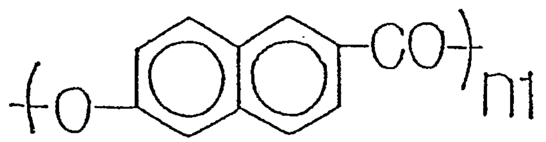

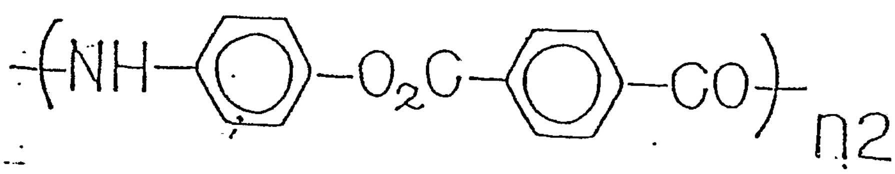

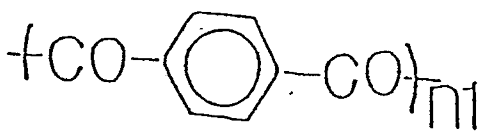

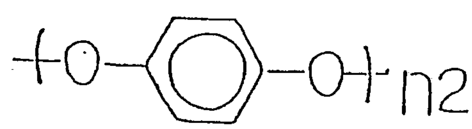

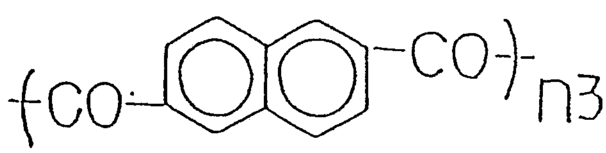

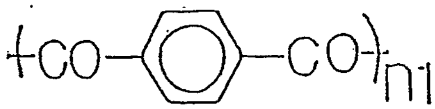
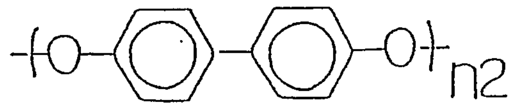

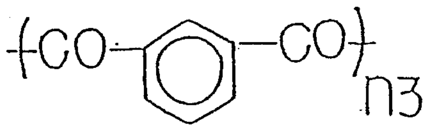
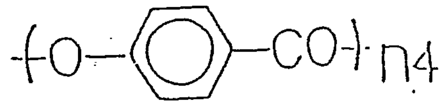

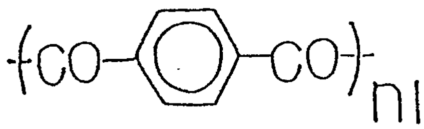
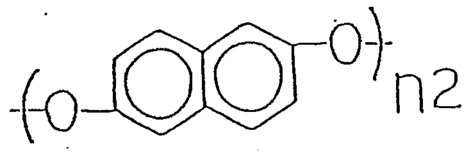

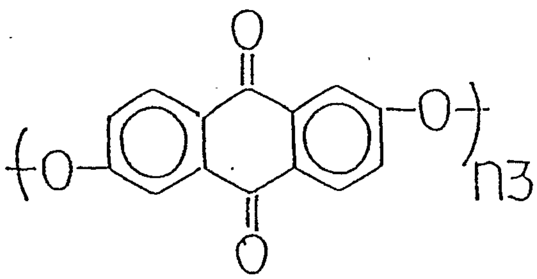
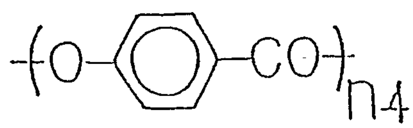

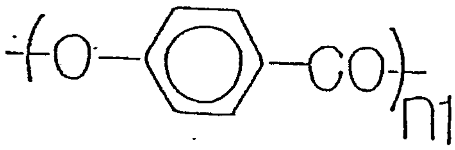

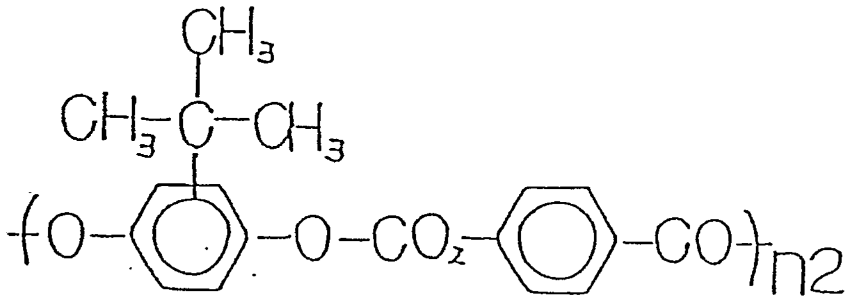

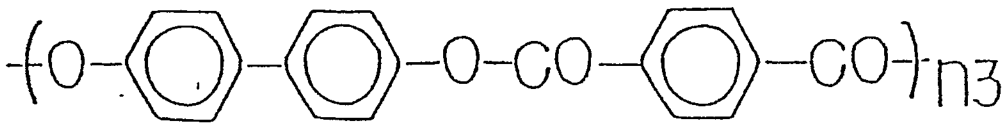

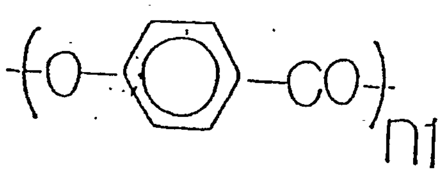

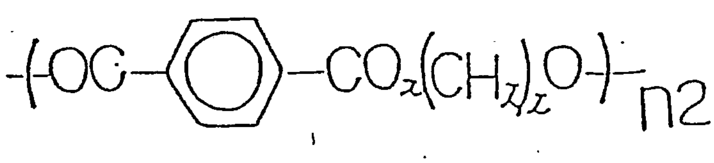

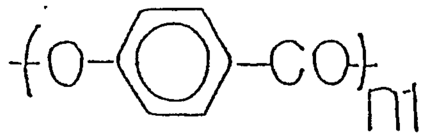

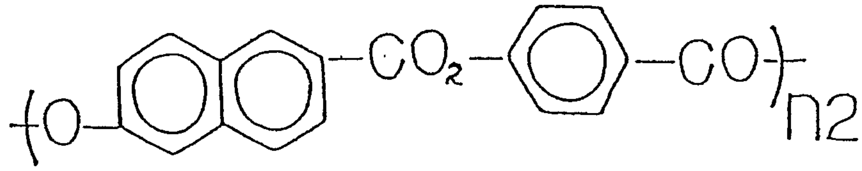

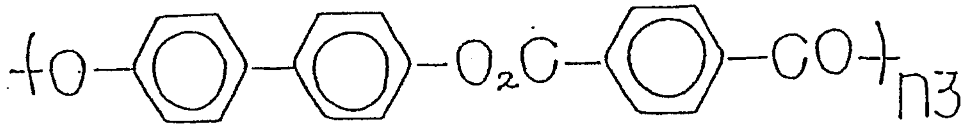

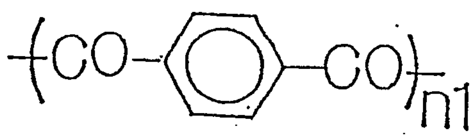

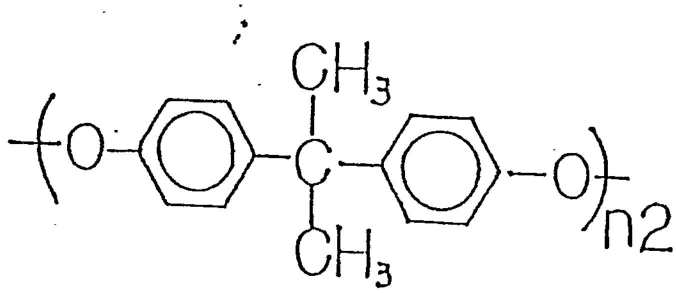

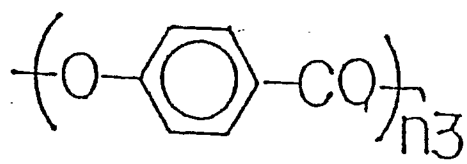

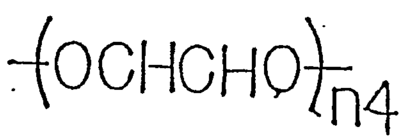

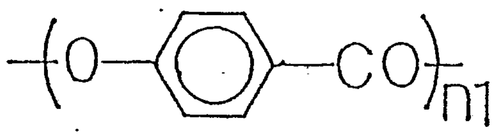

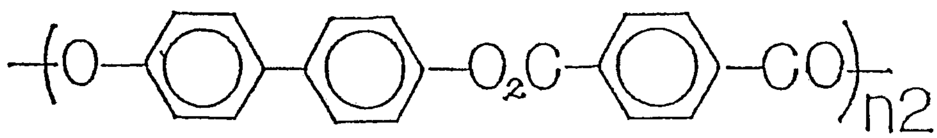

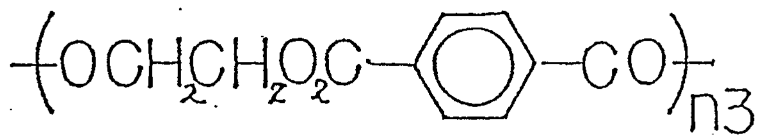

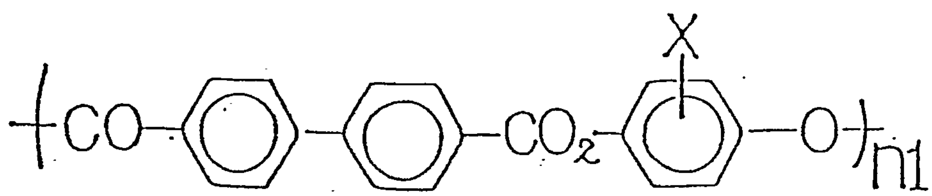

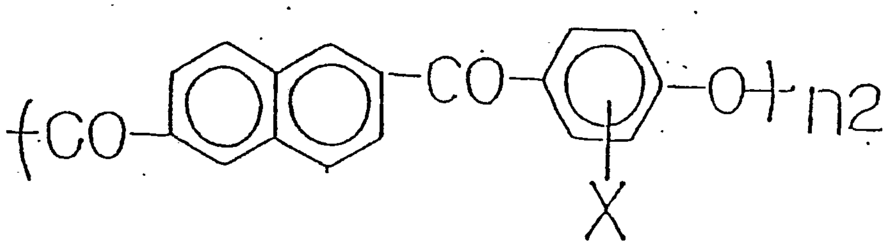

where X is hydrogen, a halogen, or an alkyl group comprising four or less carbon atoms.

In the above structural formulae, $\Sigma ni = 100$, and ni in each structural formula should preferably be equal to or greater than four. The units described above may contain various substituting groups such as halogen. Such compounds as illustrated above are particularly desirable because they are high in melt-moldability, strength, melting-point, and glass transition tempeature.

A variety of cmpounds comprising aromatic polyester amides are also useful. There are no specific requirements for their structure, and many conventionally known ones can be applied. Particularly desirable ones include those containing such structural units as given below.

Structural units derived from aminophenol as expressed by the following formulae:

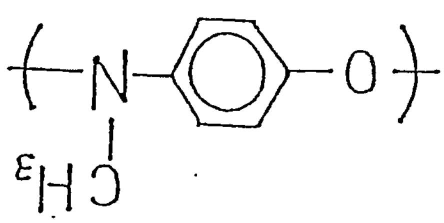

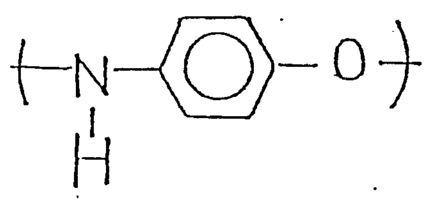

Structural units derived from an aromatic amino-carboxylic acid as expressed by the following formulae:

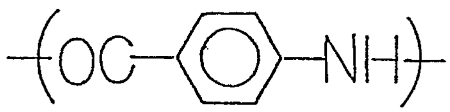

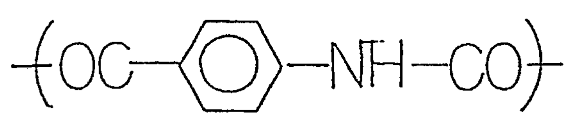

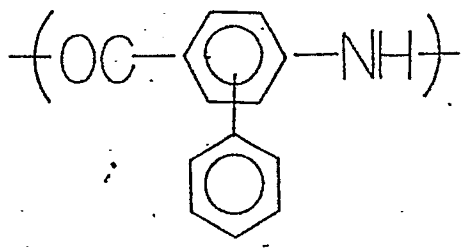

Structural units derived from a diamine as expressed by the following formulae:

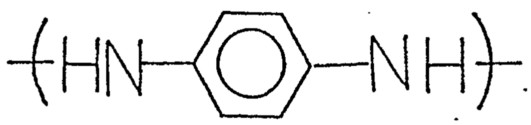

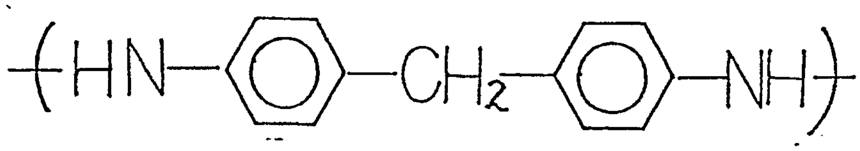

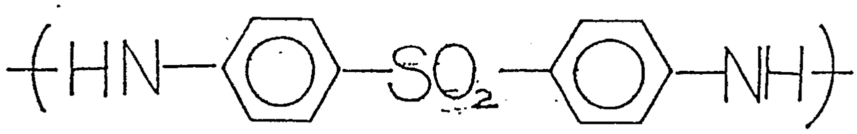

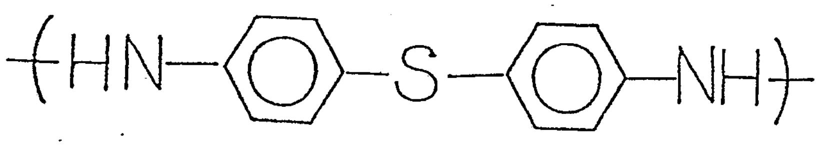

Structural units derived from an aromatic dicarboxylic acid as expressed by the following formulae, in addition to those stated previously in relation to liquid crystalline polyesters.

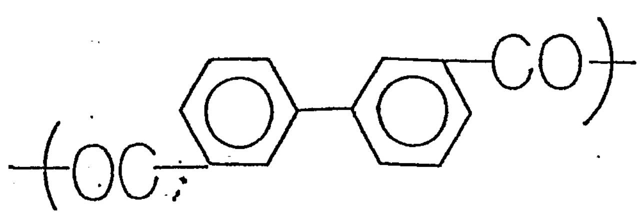

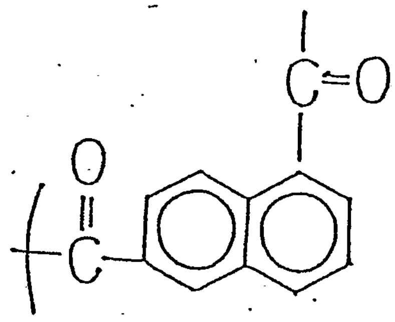
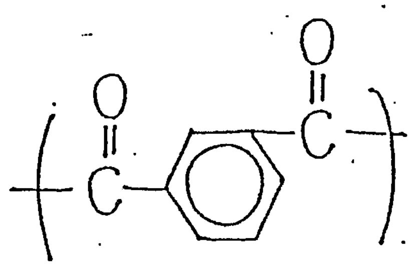

Particularly desirable liquid crystalline polyester amides include the following.

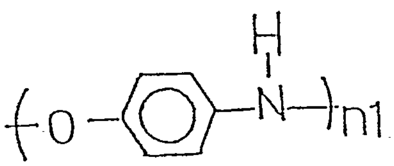
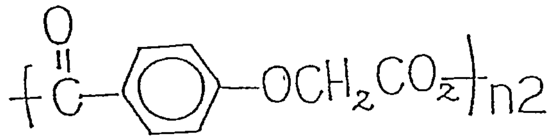

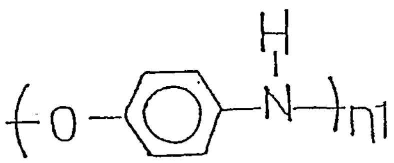

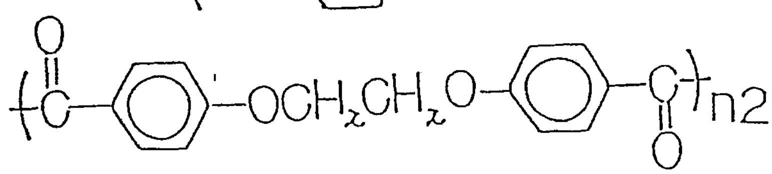

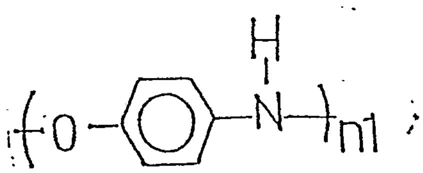
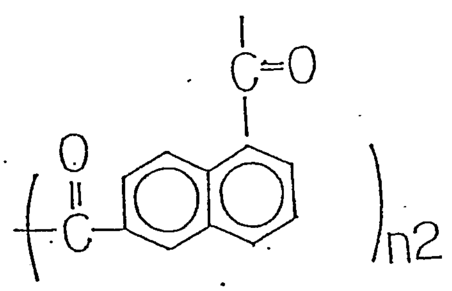

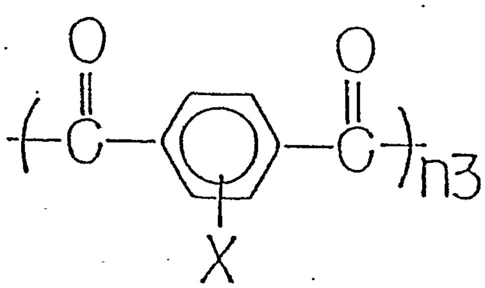

where X is hydrogen, a halogen, or an alkyl group comprising four or less carbon atoms.

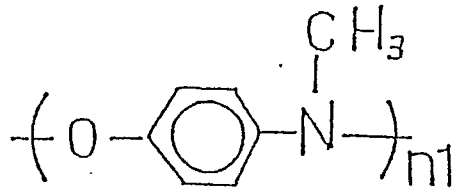

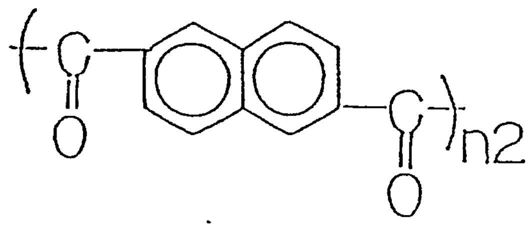

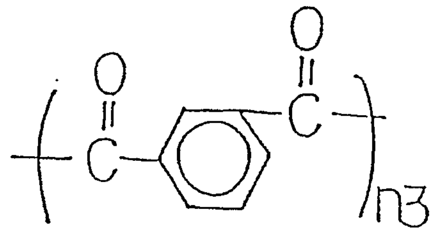

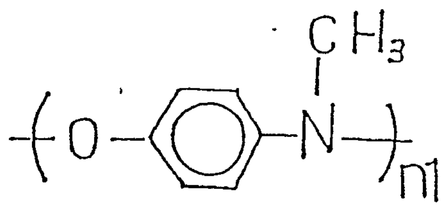

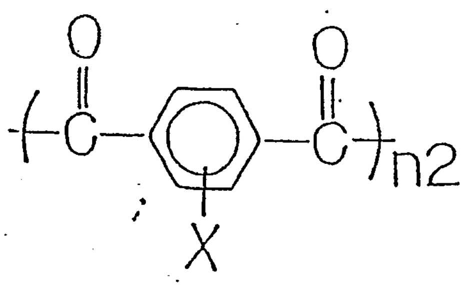

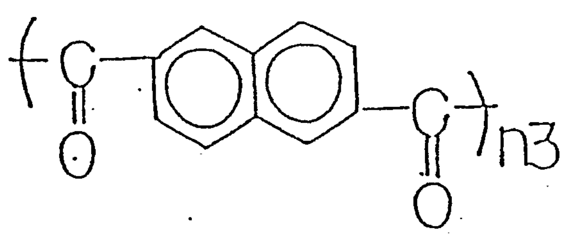

where X is hydrogen, a halogen, or an alkyl group comprising four or less carbon atoms.

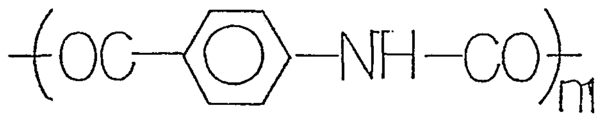

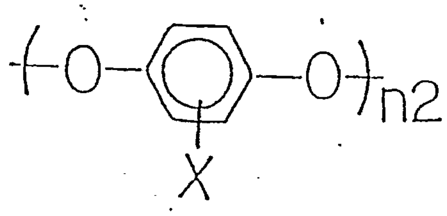

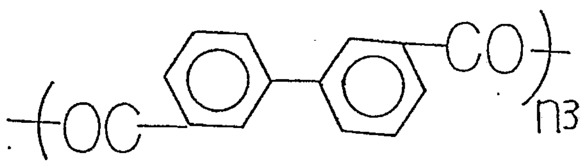

where X is hydrogen, a halogen, or an alkyl group comprising four or less carbon atoms.

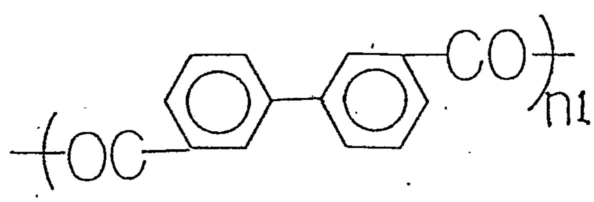

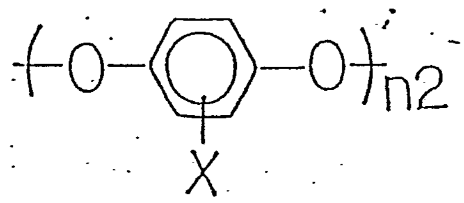

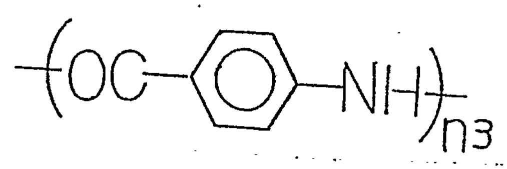

where X is hydrogen, a halogen, or an alkyl group comprising four or less carbon atoms.

In the above structural formulae, Σni = 100, and ni in each structural formula should preferably be equal to or greater than 15. The units given above may contain various substituting groups such as halogen. Like liquid crystalline resins comprising polyesters, such substances as illustrated above are high in melt-moldability and strength.

The liquid crystalline resins as proposed herein should preferably have a number average molecular weight of 8,000 or more. It is more desirable for the number average molecular weight to be 13,000 or more, with the molecular weight after solid-phase polymerization being 40,000 or more. A resin with an average molecular weight less than 8,000 may not polymerize to a high degree when subjected to solid-phase polymerization. There would be an unexpected problem due to difficulty in molding the resin accurately to shape. If in the form of fiber, for instance, it may form nodal threads. Liquid crystalline resins, particularly those with a small molecular weight, are likely to be affected largely by shear stress. As obvious from this, the properties of moldings are also likely to be affected largely by shear stress. The molecular weight distribution of the liquid crystalline resin may also have large effects. In particular, the liquid crystalline resin moldings and the liquid crystal in liquid crystalline resin composites should preferably have a narrow molecular weight distribution.

These properties are common to all materials as proposed herein.

First, the requirements for liquid crystalline resin moldings with large specific surface area are outlined in detail below.

For purposes of the invention, moldings with a specific surface area of $0.29m^2/g$ or more should be produced by melt-molding of a liquid crystal resin. Their specific surface area should preferably be $0.33m^2/g$ or more. It is more desirable for the area to be $0.4m^2/g$ or more.

The rate of solid-phase polymerization increases and the strength and elastic modulus of the resultant moldings become larger with increasing specific surface area.

A rather long solid-phase polymerization time would be required and the strength would be rather low if

the specific surface area is less than 0.29m$^2$/g. In particular, it would be impossible to achieve a high elastic modulus. If they are molded into thick fibers, furthermore, the peak of their strength and that of their elastic modulus would not agree with each other. Contrary to this, materials with a specific surface area of 0.29m$^2$/g or more have the advantage that both strength and elastic modulus are increased by solid-phase polymerization.

There are no specific requirements for the form of these liquid crystalline resin moldings, and they can be produced virtually in any form. It is particularly desirable for them to comprise highly oriented liquid crystalline resin. Such forms include short fibers, filament-type fibers, pulp, and film.

A major feature of these liquid crystalline resins with a large specific surface area is that the solid-phase polymerization results in not only an increased molecular weight of the entire material but also a narrow molecular weight distribution.

Consequently, solid-phase polymerization largely increases the strength, and fibers of 15g or more per denier (hereafter denoted as d) can be obtained. Fibers with a very high strength of 25g/d or more can also be produced. Fibers with such a high strength can be used as reinforcing fiber for various materials. It is desirable for the resin moldings as proposed herein to be as high in strength and elongation as possible.

The strength should preferably be 63kg/mm$^2$ or more, and more desirably be 189kg/mm$^2$ or more. The elongation should preferably be 0.6 percent or more, more desirably 1 percent or more, and particularly desirably 1.6 percent or more. Such resin moldings can work as good reinforcing material. If used as reinforcing material for FRP, they give products with smooth surface and stable properties. The resin moldings as proposed herein may comprise liquid crystalline resin alone, but may contain other substances such as other polymers, plasticizers, lightproof agents, antistatic agents, end group reaction terminators, fluorescent whitening agents, flame retardants, and age resistors. They may also contain such inorganic substances as titanium oxide, iron oxide, and carbon black.

If the fiber is thick, however, it is difficult to produce FRP with smooth surface. In addition, it has the disadvantage of low reliability. Methods for producing moldings with a large specific surface area are outlined below.

There are no specific requirements for the methods to produce such resin moldings with a large specific surface area, and any conventionally known method may be applicable. A particularly desirable way is to mold a combination of a liquid crystalline resin and a non-liquid crystalline resin. There are no specific requirements for the method to combine them, and any conventionally known method may be applicable.

Useful methods include the core-sheath melt-molding method, so-called polymer array method, so-called division-peeling type fiber producing method, side-by-side method, microscopic division method by a static mixer or other equipment, and polymer blend method. Of these, the so-called polymer array method, core-sheath melt-molding method, and division-peeling type fiber producing method are particularly desirable. Thus, effective methods can be summarized as follows.

(A) Those methods in which streams of a liquid crystalline resin (core component) are combined together while supplying intermediate material (intermediate component) to between them to produce a multicore flow, which is then melt-molded into a resin/liquid crystalline resin composite, followed by removal of the non-liquid crystalline resin.

(B) Methods as stated under (A) in which the multicore composite flow has a sea-island composite structure.

(C) Methods as stated under (B) in which the sea-island composite flow is formed by producing many core-sheath streams where the sheaths are made of the intermediate component, followed by combining the core-sheath streams.

With such methods, liquid crystalline resin can be easily oriented to a high degree, leading to a high strength and a high elastic modulus. Most desirably, the moldings should consist of a liquid crystalline resin covered by a non-liquid crystalline resine. When such material as bimetal-type one is used, the resin may be difficult to mold to shape depending on the deformability of the resin at the nozzle. It is desirable, therefore, to carry out molding after optimizing the orientation of the liquid crystalline resin and the other resin, as in the case of production of the so-called divided-type fiber. It is also desirable to take other appropriate measures such as evacuation of the portion below the nozzle during molding, application of an electric or magnetic field, and installation of a heating cylinder to heat the material.

Where the moldings are in the form of fiber or film, in particular, it is desirable to perform molding at the highest possible rate, because high-speed molding can produce highly oriented resin moldings. Surprisingly, it has been found that fiber can be spinned at a high speed from a liquid crystalline resin alone by means of a melt-molding process in which a non-liquid crystalline resin and a liquid crystalline resin are used as sea component and island component, respectively, as proposed herein. Thus, highly oriented resin moldings can be produced rapidly by using a material and method as proposed herein.

Next, the non-liquid crystalline resin is removed from the resultant resin composite. There are no specific requirements for the removal method, but any conventionally known method may be applicable. Such various methods include dissolution/decomposition/removal of the non-liquid crystalline resin and division/separation of the resin.

As stated previously, there are no specific requirements for the form of the resin moldings thus produced, but various different forms may be applicable depending on the application.

Resin moldings as proposed herein are then subjected to solid-phase polymerization if it is desired to further increase their strength and elastic modulus. This should preferably be carried out through high temperature treatment of the resultant moldings having a high specific surface area in a vacuum or in a flow of an inert gas such as nitrogen above their glass transition temperature. It is more desirable to perform the high temperature treatment at a temperature of 200°C or above. By such treatment, the strength of the resin moldings can be increased even to two times as high or more in some cases.

Needless to say, an alkali metal salt or an alkaline earth metal salt may also be used in the treatment.

Next, major features of the liquid crystalline resin composites consisting of a liquid crystalline resin and non-liquid crystalline resin are described below.

The liquid crystalline resin composites as proposed herein consist of such a liquid crystalline resin and non-liquid crystalline resin as stated previously. There are no specific requirements for the form of the liquid crystalline resins as proposed herein, but various different forms may be applicable. It is desirable for the liquid crystalline resin as used herein to be substantially covered by the non-liquid crystalline resin. Specifically, particularly desirable forms include the core-sheath structure, so-called polymer array structure consisting of many islands distributed in a matrix polymer, and polymer blends containing dispersed fiber with an aspect ratio (ratio of length to diameter) of 10 or more. The liquid crystalline resin contained in the non-liquid crystalline resin should be in the form of fiber. There are no specific requirements for the form of the fiber, but any form of fiber may be applicable.

Specifically, continuous fiber, fibrilar fiber, and any other forms of fiber can be useful. It is desirable, however, for these fibers to have an aspect ratio of at least 10. It is particularly desirable for the ratio to be 100 or more. With such a high aspect ratio, the resultant resin composite can have good properties. In particular, excellent properties are achieved when the product is in the form of fiber or it is applied to processing of FRP. If the aspect ratio is less than 10, resultant fibers would be low in strength and composites made up of them would also be low in strength. In the case of conventional polymers, a low aspect ratio does not constitute a serious problem because they have high flexibility. In contrast, strength would become very low in the case of liquid crystalline resins.

Concerning the form of the resin dispersed in the liquid crystalline resin, continuous fiber with a uniform diameter is particularly desirable, because high-strength FRP with stable properties can be produced using continuous fiber with a uniform diameter. In particular, the strength can be very high if the resin composite as used herein is in the form of fiber. Furthermore, the liquid crystalline resin dispersed in the non-liquid crystalline resin can be easily increased in strength. Consequently, the strength ofthe resin composite can also be increased.

The liquid crystalline resin fiber dispersed in the matrix polymer, i.e. the non-liquid crystalline resin, preferably should not be very thick. It is desirable for the diameter of the liquid crystalline resin fiber to be 20μm or less. It is more desirable for it to be 10μm or less, particularly 5μm or less. The aspect ratio and diameter of the liquid crystalline resin can be easily measured by removing the matrix polymer, i.e. the non-liquid crystalline resin, and continuous observation of its cross section.

If the liquid crystalline resin fiber is small in diameter, the resultant resin composite will be not only high in strength but also high in surface smoothness and strength. In addition, the composite will also be high in impact strength and have stable properties. In particular, this favorable tendency becomes remarkable if a highly elastic liquid crystalline resin is dispersed in a non-liquid crystalline resin.

The number of fiber units of the liquid crystalline resin in the resin composite should preferably be as large as possible. The strength of the composite increases with increasing number of fiber units. For a resin composite in the form of fiber, the number of fiber units contained in a cross section should preferably be three or more, more desirably five or more, and most desirably 10 or more. It is desirable for such liquid crystalline resin fiber to be highly oriented. Its elastic modulus should be as high as possible. The elastic modulus should preferably be 4t/mm$^2$ or more, more desirably 6t/mm$^2$ or more, and most desirably 10t/mm$^2$ or more. Its elongation should preferably be 0.6 percent or more, more desirably 1 percent or more, and most desirably 1.6 percent or more. Desirable liquid crystalline resin composites are obtained in such cases.

There are no specific requirements for the form of the liquid crystalline resin composites as proposed herein, but various different forms including fiber, chips, flakes, blocks, and film are applicable. An

appropriate form may be adopted to meet specific applications. Particularly desirable forms include fiber, chips and film. In the case of fiber and film, the resultant liquid crystalline composite will be high in strength and easy to handle. In particular, there is another advantage that the strength can be controlled easily in the case of composite-type material produced by molding a liquid crystalline resin composite as proposed herein after being laminated.

The use of chips is particularly desirable, because a liquid crystal resin composite as proposed herein can be further processed into various forms.

The tensile strength of a liquid crystalline resin composite as proposed herein should preferably be $35kg/mm^2$ or more, and more desirably $70kg/mm^2$ or more. A liquid crystalline resin composite with such a high tensile strength is particularly desirable because it can be widely applied to various types of structural material.

An appropriate combination of a liquid crystalline resin and a non-liquid crystalline resin constituting a liquid crystalline resin composite as proposed herein should be identified to meet specific purposes and applications.

Specifically, it should be decided after considering such factors as the affinity, strength, elongation, melting point, thermal decomposition temperature, and smoothness of process passage of the liquid crystalline resin and non-liquid crystalline resin.

It is often desirable for the liquid crystalline resin and non-liquid crystalline resin to have different melting points if the liquid crystalline resin composites as proposed herein are to be used as base for the so-called composite moldings (the liquid crystalline resin composites as proposed herein being laminated and then molded by heat pressing or extrusion into other form of material). The difference in melting point between the liquid crystalline resin and the non-liquid crystalline resin should preferably be 20° C or more, more desirably 40° C or more, and most desirably 50° C or more.

A composite reinforced with resin fiber (liquid crystalline resin fiber contained in matrix polymer) can be produced easily by using a liquid crystalline resin composite as proposed herein if there is such a difference in melting point.

An appropriate ratio between the liquid crystalline resin and non-liquid crystalline resin should be identified to meet specific purposes and applications. In general, the content of the liquid crystalline resin should preferably be in the range from 5 to 95 weight percent. The effect of reinforcing TLCP may be reduced if its content is less than five weight percent.

If the content is larger than 95 weight percent, on the other hand, the non-liquid crystalline resin becomes likely to break, resulting in a deterioration not only in the basic properties but also in the processability of the material. Where the liquid crystalline composite is used in master material for the reinforcement of the non-liquid crystalline resin, the content of the liquid crystalline resin may be as high as up to 98 weight percent. Thus, an appropriate upper limit should be identified after considering the specific purposes of the material and performance of the processes.

The variation in the weight ratio between the liquid crystalline resin and non-liquid crystalline resin should be 10 percent or less. It is more desirable for the variation to be five percent or less, and most desirable to be three percent or less. A variation greater than 10 percent should be avoided because the properties of the material become unstable. Material with stable properties are obtained when the variation is three percent or less. The variation can be measured easily by observing the cross section of the liquid crystalline resin composite.

To determine the variation, 10 arbitrarily selected cross sections are observed and the average ratio between the liquid crystalline resin and non-liquid crystalline resin in the liquid crystalline resin composite is calculated, followed by calculation of the variation for each cross section by using the average.

A resin composite as proposed herein may consist only of a liquid crystalline resin and a non-liquid crystalline, but also may contain other components such as other polymers, plasticizers, lightproof agents, antistatic agents, end group reaction terminators, fluorescent whitening agents, flame retardants, and age resisters. Inorganic substances such as titanium oxide and iron oxide may also be contained.

Next, major features of the other constituent of the liquid crystalline resin composite, namely non-liquid crystalline resins, are outlined below.

There are no specific requirements for the non-liquid crystalline resins except that they should be able to be melt-molded together with the liquid crystalline resin used. Many conventionally known resins can be applied.

Particularly desirable non-liquid crystalline resins include the following.

(A) thermoplastic nylons,

(B) thermoplastic polyesters,

(C) thermoplastic fluoropolymers,

(D) thermoplastic sulfur-containing aromatic resins,
(E) thermoplastic aromatic ether resins,
(F) thermoplastic aromatic ether-ketone resins, and
(G) polypropylene.

Particularly desirable thermoplastic nylons include nylon 66, nylon 6, comolymer of nylon 66 and nylon 6, nylon 610, nylon 46, nylon 10, nylon 11, and nylon 12, as well as copolymers comprising terephthalic acid such as nylon 10T and nylon 12T, and copolymers comprising isophthalic acid such as nylon 6IT and nylon 6/66/T. Alicyclic nylons can also be used. The use of nylons is particularly desirable because most nylons are particularly high in fatigue resistance and can form a very strong liquid crystalline resin composite when combined with a high-strength, high-elasticity liquid crystalline resin to allow the nylon and the liquid crystalline resin to offset each other's faults.

Useful thermoplastic polyesters include polyethylene terephthalate, polybutylene terephthalate, polyethylene naphthalate, polybutylene naphthalate, polycarbonates, and their copolymers. Liquid crystalline resin composites can be produced accurately to shape by using these polyesters because they are high in compatibility with liquid crystalline resins and also high in dimensional stability.

There are no specific requirements for the fluoropolymers except that they should be thermoplastic, and many conventionally known fluoropolymers can be applied. Particularly desirable ones include polytetrafluoroethylene, copolymers of tetrafluoroethylene and alkoxyethylene, copolymer of tetrafluoroethylene and hexafluoropropylene, copolymer of tetrafluoroethylene and ethylene, vinylidene fluoride, and partially chlorinated, copolymerized tetrafluoroethylene.

For polytetrafluoroethylene, copolymers of tetrafluoroethylene and fluoroalkoxyethylene, and copolymer of tetrafluoroethylene and hexafluoroethylene, etc., it is very effective to add appropriate additives such as plasticizer before melt-molding because they are very high in melt viscosity and may be difficult to melt-mold.

Useful thermoplastic sulfur-containing aromatic resins include polyphenylene sulfide, polybiphenyl sulfide, polynaphthalene sulfide, polyphenylene sulfide sulfone, polyphenylene sulfide ketone, polyphenylene ether sulfone, and their copolymers. These polymers are particularly high in thermal and chemical resistance and, when combined with a high-strength, high-elasticity liquid crystalline resin, can form liquid crystalline resin composites with good characteristics which cannot be achieved in conventional materials.

Being high in thermal and chemical resistance, they have the advantage of being able to form a liquid crystalline resin composite which can be easily molded in a solid phase to give a liquid crystalline resin composite with a further increased strength and elastic modulus.

Particularly desirable aromatic ether-ketone resins include the following.

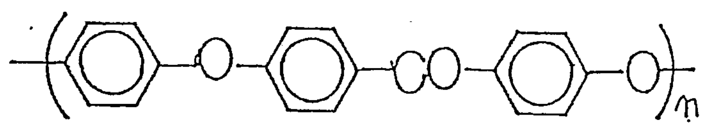

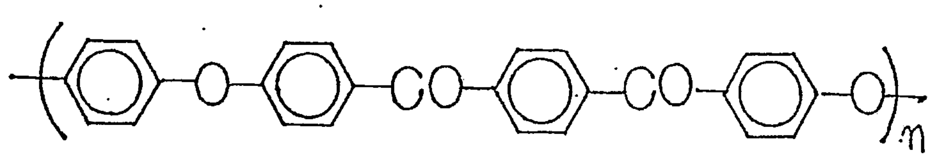

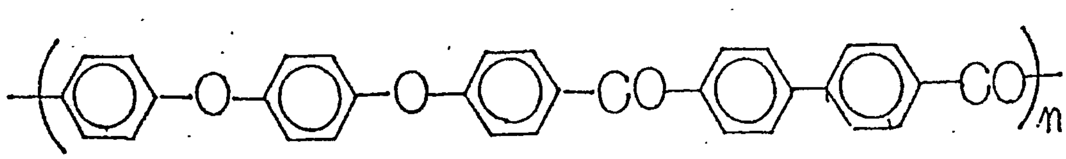

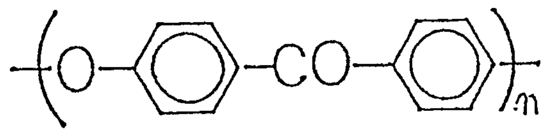

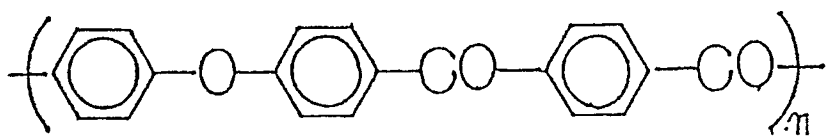

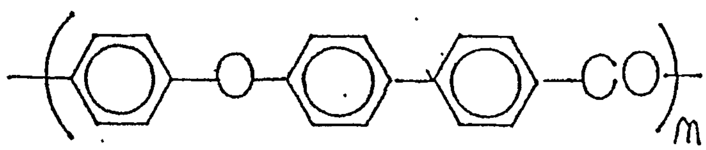

Like sulfur-containing aromatic resins, these resins have the advantage of high flexibility in addition to high thermal and chemical resistance.

Useful aromatic ethers include polyphenylene oxide and its various modifications.

In general, these aromatic resins are high in thermal resistance and therefore, have the advantage of being able to be easily melt-molded together with a liquid crystalline resin. Furthermore, being high in compatibility with liquid crystalline resins, they can form liquid crystalline resin composites which are highly resistant to breakage.

Liquid crystalline resin composites containing polypropylene as sea component can be applied in various fields where water absorption should be eliminated and high strength is needed, because both materials are extremely low in the coefficient of water absorption.

Basically, the methods described previously in relation to liquid crystalline resin moldings with a large specific surface area can be applied to the production of such liquid crystalline resin composites. Thus, in the methods:

(A) Several streams of a liquid crystalline resin (core component) are combined while supplying intermediate material (intermediate component) to between them to produce a multicore composite flow, which is then melt-molded into a resin/liquid crystalline resin composite.

A major feature of the present invention is that the liquid crystalline resin composite is subjected to a solid-phase polymerization process. The solid-phase polymerization of a liquid crystalline resin composite has the following advantages.

(a) The melting point of a liquid crystalline resin is increased by solid-phase polymerization. In contrast, the melting point of the non-liquid crystalline resin does not change, making it possible to control to some degree the difference in their melting point. Therefore, material consisting of components with different melting points can be produced by solid-phase polymerization even if they have similar melting points during the liquid crystalline resin composite molding process. If the liquid crystalline resin composite is further subjected to injection molding, the liquid crystalline resin shows behaviors similar to those of glass fiber and carbon fiber in fiber-reinforced resin. Thus, lightweight, high-strength, molded liquid crystalline resin composites can be produced.

(b) If such a resin as nylon or polyester which can be polymerized in a solid phase is used or if a resin which undergoes an exchange reaction such as ester exchange is used, reaction occurs between the liquid crystalline resin and non-liquid crystalline resin to strengthen the adhesion between the liquid crystalline resin and non-liquid crystalline resin. In addition, a high toughness is achieved because the non-liquid crystalline resin is polymerized to a high degree.

(c) The liquid crystalline resin in the liquid crystalline resin composite increases in strength and elastic

modulus due to solid-phase polymerization. Thus, liquid crystalline resin composites with high strength and high elasticity are produced.

Needless to say, generally known alkali metal salts and/or alkaline earth metal salts may be used in such treatment. It is desirable to carry out solid-phase polymerization after adding such substances as alkali metal salts and alkaline earth metal salts to the non-liquid crystalline resin in producing a liquid crystalline resin composite.

Next, particularly desirable forms of the materials and methods as proposed herein are outlined below.

It is desirable for liquid crystalline resin moldings and liquid crystalline resin composites to be infusible where high heat resistance is required.

In making a liquid crystalline resin composite infusible, the entire liquid crystalline resin composite, only the liquid crystalline resin, or only the non-liquid crystalline resin may be made infusible.

There are two methods for making liquid crystalline resins infusible. In one of them, liquid crystalline resin is polymerized in a solid phase so that its melting point is increased by 20 °C or more, and more desirably by 30 °C or more, followed by heat treatment at a temperature above the increased melting point. All the solid-phase polymerization methods previously stated are applicable, and the subsequent heat treatment may be performed in air. By carrying out this method, liquid crystalline resins can be easily made infusible. When this method is used, at least the liquid crystalline resin component is made infusible regardless of whether it is contained in liquid crystalline moldings or in liquid crystalline resin composite.

In the other method, liquid crystalline resin containing and/or carrying on its surface such substances as given below is heat-treated in an oxygen-containing atmosphere to make it infusible.

Such substances include fine particles of iron, cobalt, chromium, and their compounds.

Particularly desirable ones include iron and its compounds such as pure iron, various iron oxides, iron hydroxides, iron chlorides, iron sulfides, iron sulfates, iron nitrates, iron carbonyl compounds, and alloys of iron and other metals. Such substances as various chromium oxides and cobalt oxides are also effective. Liquid crystalline resin containing and/or carrying on its surface such substances is heat-treated in an oxygen-containing atmosphere. The content of such substances should preferably be one weight percent or more, and more desirably in the range from 10 to 40 weight percent. Properties of the resin tend to deteriorate as the content exceeds 40 weight percent. There is no specific upper limit for cases where deterioration in properties are not likely.

Heat treatment should be performed in an oxygen-containing atmosphere at a heating temperature equal to or higher than the melting point of the liquid crystalline resin minus 50 °C. As the maximum temperature for the treatment, the melting point plus 20 °C is sufficient. The treatment time should be at least one second, though depending largely on such factors as the type of liquid crystalline resin, type of fine particles, and content of oxygen.

Not only liquid crystalline resins, but also some aromatic resins become infusible whend heat-treated with such special fine particles. Therefore, the entire liquid crystalline resin composite can be made infusible by this treatment if an appropriate non-liquid crystalline resin is used.

Needless to say, this treatment may be performed for liquid crystalline resin after being polymerized in a solid phase.

The liquid crystalline resin composites and the liquid crystalline resin moldings with large specific surface area as proposed herein may be colored with a special coloring matter.

Particularly desirable coloring matters include organic and inorganic pigments. In particular, pigments with a vaporization temperature of 300 °C or higher are desirable. Particularly desirable pigments include chromium oxide, nickel titanium yellow, ultramarine, mineral fast yellow, naples yellow, cadmium yellow, cadmium red, cadmopone, red oxide, mercury sulfide cadmium, and phthalocyanine. Particularly desirable organic pigments include various copper phthalocyanines, various anthraquinone pigments, perinone, perylene pigments, dioxazine pigments, and quinacridone pigments.

Each of these pigments may be used independently or in combination with others. The use of such agents as dispersion assistant may also be effective. For the present invention, it is desirable for these pigments to be contained in the liquid crystalline resin and/or non-liquid crystalline resin. There are no specific standards for their content because the required content varies greatly with the purpose and application. However, care should be given to the fact that some materials including liquid crystalline resin may become infusible when heated together with a compound of such substances as iron and chromium in an oxygen-containing atmosphere. Addition of a pigment, therefore, should be performed either in a vacuum or in an inert gas such as nitrogen.

The required content varies greatly with the type of pigment. An appropriate content should be determined for each case.

Furthermore, the liquid crystalline resin moldings and liquid crystalline resin composites as proposed

herein can be made highly electrically conductive as required. This is achieved by adding electrically conductive substances to liquid crystalline resin moldings or liquid crystalline composites so that the latter contain the former or carry the former on their surface. Desirable conductive substances include metals, alloys and their compounds. Such substances as carbon black are also effective.

Particularly desirable ones include various carbon black materials, zinc oxide, various tin oxides, titanium oxide, copper iodide, titanium nitride, silicon nitride, magnetic iron, copper sulfide, and indium oxide. These substances are particularly desirable because they remain stable even when exposed to high temperature.

These electrically conductive substances are dispersed uniformly inside the liquid crystalline resin and/or over its surface. Where a further increased electric conductivity is needed, it is desirable for such substances to exist partly in the form of layers or striations. There are no specific limits to the number of suchd layers and striations. For instance, the portions containing electrically conductive substances may be the islands in a polymer array structure which have many islands.

The resin which constitutes such layers or striations may be a liquid crystalline resin or a non-liquid crystalline resin. It is more desirable for the resin to be non-liquid crystalline because it can contain a relatively large amount of electrically conductive substances. The content of electrically conductive substances in the portions containing these striaticns or layers should preferably be five weight percent or more. It is more desirable to add such electrically conductive substances to the resin to a content of 30 weight percent. This makes it possible to produce liquid crystalline resin moldings or liquid crystalline resin composites which are high in electric conductivity. The materials as proposed herein will be particularly useful in areas where high-strength fibers and films are needed. In such areas, high-strength material has conventionally been produced by highly orienting fibers, but it has been difficult to impart high electric conductivity to such fibers. In contrast, liquid crystalline resin moldings and liquid crystalline composites can be extremely high in electric conductivity because extension is not required. Since the liquid crystalline resins as proposed herein can be made infusible, they can be baking-finished with such substances as tin oxide to further increase the electric conductivity.

Next, methods for rapid solid-phase polymerization of the liquid crystalline resin moldings with a small specific surface area as well as the liquid crystalline resin moldings and the liquid crystalline resin composites as proposed herein are outlined below.

Such organic phosphorus compounds as described below are added to moldings before solid-phase polymerization.

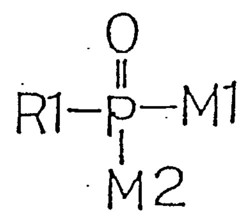

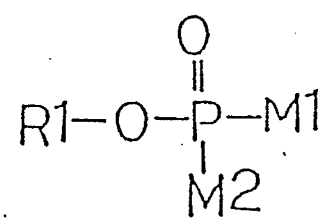

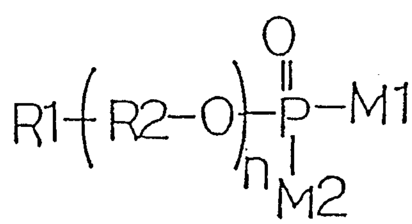

where R1 and R2 are a hydrocarbon, M1 an alkali metal, and M2 one of the following.

(a) alkali metal, (b) hydrogen, (c) hydrocarbon, and (d) oxygen-containing hydrocarbon. In the above formulae, n denotes an integer equal to or greater than one.

As R1, the following groups are particularly desirable.

A. alkyl group with 4-30 carbon atoms

B. alkylphenyl group with 7 or more carbon atoms

C. phenyl group with 6 or more carbon atoms

Groups desirable as R2 include hydrocarbons with five or less carbon atoms, two or three carbon atoms in particular. This means that the unit connected with the phosphorus atom is an ethylene oxide group or an propylene oxide group. In such cases, these organic phosphorus compounds can be easily dissolved or dispersed in water and therefore can be added uniformly to liquid crystalline resin moldings or liquid crystalline resin composites.

Sodium and potassium are particularly desirable as M1. Substances particularly desirable as M2 include alkali metals such as sodium and potassium; hydrogen; hydrocarbons; and oxygen-containing hydrocarbons such as ethylene oxide.

For purposes of the invention, it is essential to add such organic phosphorus compounds before solid-phase polymerization. Other substances such as potassium iodide may also be useful.

There are no specific standards for the content of these organic phosphorus compounds since it varies with the type and form of liquid crystalline resin moldings or liquid crystalline resin composites. It is desirable for the content to be 0.05 weight percent or more.

The particularly desirable content range is from 0.1 to 10 weight percent. A satisfactory effect cannot be achieved if their content is less than 0.05 weight percent. If it is larger than 10 weight percent, handling becomes difficult though solid-phase polymerization can be performed without significant problems. Such a high content is not desirable also because many troubles may occur due to residual organic phosphorus compounds.

There are no specific requirements for the methods to add such organic phosphorus compounds, and many conventionally known methods are applicable. Effective methods include immersion in liquid in which an organic phosphorus compound is dissolved and/or dispersed, and coating with the compound.

In particular, liquid crystalline resin to which an organic phosphorus compound is added in the form of solution and/or dispersions should be subjected to solid-phase polymerization after being dried as required. As the drying method, microwave drying is desirable because migration of the organic phosphorus compounds can be avoided.

If the liquid resin is in the form of fiber, these compounds may be used as a component of the lubricant for the spinning process.

The resin thus provided with organic phosphorus compounds is then subjected to solid-phase polymerization. All solid-phase polymerization methods as previously stated are applicable.

With many good features, the liquid crystalline resin moldings and liquid crystalline resin composites as proposed herein can be useful for a wide variety of applications as listed below.

The applications include various reinforcing materials, tire code, reinforcement for optical fiber, belt, propeller, window frame, blind, helmet, chips for molding, baking material for rust prevention, chemical resistant material, material for parabolic antenna, weather resistant reinforcement, high-strength water-repellent material, kitchen sink, kitchenware, kitchen utilities, semiconductor material, base material for immersion heater, frying pan with built-in cast heater, heating equipment with cast heater, concrete reinforcement, underwater concrete reinforcement, marine material, chips for high-strength moldings, FRP, base material for FRP, base material for electric insulation, base material for printed board, printed board, rope, protection material, safety gloves, screen, filter for chemicals, filter, filter reinforcement, base material for combined filament yarn with carbon fiber, high-strength film-like material, material for automobile, wind stabilizer, roofing material, roofing material for snowy district, tent, tentative roofing material, wall material, desk/table, plywood surface material, high-strength cloth, various frames, base material for bicycle, superconductive material, oilless bearing, cleaning brush, gasket, packing material, filter for cartridge, paper, plain gauze for printing, demister, slider/guide, base material for oilless bearing, flame retardant wall, flame retardant floor, dust-free garment, velour fabric for electro-magnetic wave shielding, base material for aircraft (wall, ceiling), engine head cover, plywood, base material for plywood, filler cloth for inorganic fiber, colored furniture, draft wall, interior automotive trim, exterior automotive trim, board, blackboard, floor, fishing rod, clothes-drying bar, pole for carp pennant, toy, awning, substitute for reed screen, blind, base material for disk brake, chemical-resistant piping, insulating film, high-strength cloth, flame retardant wall material, and the above materials with electrically conductive and/or static properties.

The present invention will be more clearly understood with reference to the following practical

examples.

Needless to say, these examples impose no limitations on the invention.

[Practical Examples]

[Practical Example 1]

Operations from preparation of liquid crystalline resin to production of liquid crystalline resin moldings with large specific surface area were carried out as described below. No significant troubles occurred during the process.

A. Preparation of Liquid Crystalline Resin

A liquid crystalline resin similar to VECTRA, a product supplied by U.S. Hoechst Celanese was produced according to the method disclosed in Japanese Patent Application No.77691 of 1979. The resin had a liquid crystal transition temperature of about 250° C, melting point of about 280° C, and glass transition temperature of about 120° C. The resin was dissolved in pentafluorophenol, and its molecular weight was measured. Its number average molecular weight was about 10,000.

B. Yan-Making

Liquid crystalline resin moldings with a large specific surface area were produced from the above polymer by means of special spinning equipment designed for the production of so-called polymer array material. No significant troubles took place during the yarn-making process:

(1) Sea component: Polystyrene
(2) Island component: Above-mentioned liquid crystalline resin
(3) Island/sea (weight ratio) = 50/50 (The variation in the island/sea weight ratio in the fiber was less than one percent.)
(4) Number of islands = 70
(5) Spinning temperature = 310° C
(6) Spinning rate = 200m/min
(7) Extension rate: not extended
(8) Monofilament fineness of the resultant fiber = 1.5 denier (hereafter denoted by "d")
(9) Removal of sea component: The above-mentioned polymer array fiber is immersed in trichlene to dissolve and remove the sea component. The removal rate was calculated at 100 percent from measured weight loss.

C. Characteristics of Resultant Liquid Crystalline Resin Moldings

(1) Fineness = about 0.01d
(2) Specific surface area = about 2.8$m^2$/g
(3) Strength 5.2g/d (65.5kg/$mm^2$)
(4) Elongation = 1.3%
(5) Elastic modulus = 480g/d

D. Condition for Heat Treatment of Liquid Crystalline Resin Moldings

(1) Temperature:
1st step = 200° C for 30 min
2nd step = 289° C for 1 hour
(2) Atmosphere:
Fiber in a relaxed state is treated in flowing nitrogen.

E. Characteristics of Resultant Liquid Crystalline Resin Moldings

(1) Fineness = about 0.01d
(2) Specific Surface Area = about $2.8m^2/g$
(3) Strength = 23g/d ($290kg/mm^2$)
(4) Elongation = 2.8 %
(5) Elastic Modulus = 620g/d

Thus, high-strength liquid crystalline resin moldings were obtained. The fiber was high in chemical resistance and was applicable to various uses in the as-obtained form. It was then cut into about 3-7mm pieces and converted into pulp-like material. Elsewhere, very fine fiber of 0.5d was produced from polyethylene sulfide by the same procedure (but extended 3.8 times). It was cut into 5-10mm pieces, mixed with the pulp-like material produced above from the liquid crystalline resin and converted into paper-like material, which was then heated in an oven at 300° C and passed through a mangle consisting of a roller of 250° C and a roller of about 30° C. The paper-like material thus obtained was found to be high in strength and in thermal and chemical resistance.

The very fine liquid crystalline resin thus molded was left to stand in air at high temperature. It was found to be carbonized without being melted. When it was further baked in a nitrogen atmosphere, high-quality carbon fiber with a strength of $240kg/mm^2$ was obtained.

[Practical Example 2]

An attempt was made to see if rapid spinning of a composite yarn can be performed using the resin and equipment stated in Practical Example 1. Surprisingly, spinning was achieved easily.

(1) Sea component: Same as in Practical Example 1
(2) Island component: Same as in Practical Example
(3) Island/sea (weight ratio) = 60/40 (The variation in the island/sea weight ratio of the fiber was less than one percent.)
(4) Number of islands = 70
(5) Spinning temperature = 310° C
(6) Spinning rate = 3500m/min
(7) Extension rate: not extended
(8) Monofilament fineness of the resultant fiber = 2.3d
(9) Removal of sea component: The same procedure as in Example 1 was carried out. The removal rate was calculated at 100 percent.

C. Characteristics of Resultant Liquid Crystalline Resin Moldings

(1) Fineness = about 0.02d
(2) Specific surface area = about $2m^2/g$
(3) Strength 8.2g/d($103kg/mm^2$)
(4) Elongation 1.7%
(5) Elastic modulus = 510g/d

D. Condition for Heat Treatment of Liquid Crystalline Resin Moldings

(1) Temperature:
1st step = 200° C for 40 min
2nd step = 289° C for 1 hour
(2) Atmosphere:
Fiber in a relaxed state is treated in flowing nitrogen.

E. Characteristics of Resultant Liquid Crystalline Resin Moldings

(1) Fineness = about 0.02d
(2) Specific Surface Area = about $2m^2/g$
(3) Strength = 26g/d ($328kg/mm^2$)

(4) Elongation = 3.2%
(5) Elastic Modulus = 630g/d

Thus, high-strength liquid crystalline resin moldings were obtained. The fiber was high in chemical resistance and was applicable to various uses in the as-obtained form.

[Comparative Example 1]

For comparison, an attempt was made to spin fiber rapidly from the liquid crystalline resin stated in Practical Example 1 alone. The maximum spinnable rate was only 280m/min, and the fineness of the spinned fiber was 7d at most. The fiber of 7d was subjected to solid-phase polymerization by the same procedure as in Practical Example 1. The increase in strength was very small, namely, from 3.8g/d to 4.8g/d. The fiber was then treated at 289 °C for 45 hours. Fiber with a strength of 18g/d and elastic modulus of 470g/d was obtained. However, a very long solid-phase polymerization time was required, and the elastic modulus was rather low. Another attempt was made to produce similar fiber with a number average molecular weight of 4,000 for comparison, but a large number of nodal yarns were formed, making it impossible to perform spinning in a satisfactory way.

[Practical Example 3]

The liquid crystalline resin produced in Practical Example 1 was subjected to solid-phase polymerization in flowing nitrogen to produce resin with a number average molecular weight of 16,000. The same procedure as in Practical Example 1 was carried out to mold the resin into liquid crystalline resin moldings as stated below.

(1) Sea component: same as in Practical Example 1
(2) Island component: liquid crystalline resin with a number average molecular weight of 16,000.
(3) Island/sea (weight ratio) = 50/50 (The variation in the island/sea weight ratio of the fiber was less than one percent.)
(4) Number of islands = 36
(5) Spinning temperature = 305 °C
(6) Spinning rate = 1200m/min
(7) Extension rate: not extended
(8) Monofilament fineness of the resultant fiber = 45d.
(9) Removal of sea component: The same procedure as in Practical Example 1 was carried out. The removal rate was calculated at 100 percent.

C. Characteristics of Resultant Liquid Crystalline Resin Moldings

(1) Fineness = about 0.6d
(2) Specific surface area = about 0.36$m^2$/g
(3) Strength 12.8g/d (161kg/$mm^2$)
(4) Elongation = 2.3%
(5) Elastic modulus = 540g/d

D. Condition for Heat Treatment of Liquid Crystalline Resin Moldings

(1) Temperature:
1st step = 250 °C for 3 hours
2nd step = 270 °C for 1 hour
(2) Atmosphere:
Fiber in a relaxed state is treated in flowing nitrogen.

E. Characteristics of Resultant Liquid Crystalline Resin Moldings

(1) Fineness = about 0.6d
(2) Specific Surface Area = about 0.36$m^2$/g

(3) Strength = 27g/d (328kg/mm$^2$)
(4) Elongation = 3.8%
(5) Elastic Modulus = 810g/d

[Practical Example 4]

Operations from preparation of liquid crystalline resin to production of liquid crystalline resin moldings with large specific surface area were carried out as described below. No significant troubles occurred during the process.

A. Preparation of Liquid Crystalline Resin

A liquid crystalline polyester amide was produced according to the method disclosed in Japanese Patent Application No.162722 of 1988. Specifically, the liquid crystalline resin was produced from 3,3-biphenyl dicarboxylic acid, t-butyl hydroquinone diacetate, and p-acetoaminobenzoic acid. The resultant material had a liquid crystal transition temperature of about 250°C and glass transition temperature of about 150°C.

B. Yarn-Making

Liquid crystalline resin moldings with large specific surface area were produced from the above resin by means of special spinning equipment designed for the production of so-called polymer array material. No significant troubles took place during the yarn-making process.

(1) Sea component: Same as in Practical Example 1
(2) Island component: Above-mentioned liquid crystalline resin
(3) Island/sea (weight ratio) = 50/50 (The variation in the island/sea weight ratio of the fiber was less than one percent.)
(4) Number of islands = 36
(5) Spinning temperature = 315°C
(6) Spinning rate = 1200m/min
(7) Extension rate: not extended
(8) Monofilament fineness of the resultant fiber = 40d
(9) Removal of sea component: The same procedure as in Practical Example 1 was carried out. The removal rate was calculated at 100 percent.

C. Characteristics of Resultant Liquid Crystalline Resin Moldings

(1) Fineness = about 0.6d
(2) Specific surface area = about 0.36m$^2$/g
(3) Strength 10.7g/d (135kg/mm$^2$)
(4) Elongation = 2.5%
(5) Elastic modulus = 410g/d

D. Condition for Heat Treatment of Liquid Crystalline Resin Moldings

(1) Temperature:
1st step = 200°C for 2 hours
2nd step = 250°C for 1 hour
(2) Atmosphere:
Fiber in a relaxed state was treated in flowing nitrogen.

E. Characteristics of Resultant Liquid Crystalline Resin Moldings

(1) Fineness = about 0.6d
(2) Specific Surface Area = about 0.36m$^2$/g

(3) Strength = 18.9g/d (238kg/mm$^2$)
(4) Elongation = 3.8%
(5) Elastic Modulus = 470g/d
(6) Number average molecular weight of resultant liquid crystalline resin moldings = 47,000

Thus, high-strength liquid crystalline resin moldings were obtained. The fiber was high in chemical resistance and was applicable to various uses in its as-obtained form.

[Practical Example 5]

The following operations were carried out to produce a liquid crystalline resin composite consisting of a liquid crystalline resin and a sulfur-containing aromatic resin as island and sea, respectively. No significant troubles occurred during the process.

A. Yarn-making

(1) Sea component: A poliphenylene sulfide product supplied by Toray/Phillips Petroleum Co.
(2) Island component: A "liquid crystalline polyester product, VECTRA A950" supplied by U.S. Hoechst Celanese.
(3) Island/sea (weight ratio) = 60/40 (The variation in the island/sea weight ratio of the fiber was less than one percent.)
(4) Number of islands = 36
(5) Spinning temperature = 310 °C
(6) Spinning rate = 3500m/min
(7) Extension rate: not extended

B. Characteristics of Resultant Liquid Crystalline Resin Composite

(1) Monofilament fineness of resultant fiber = 1.8d
(2) Strength = 6.8g/d (86kg/mm$^2$)
(3) Elongation = 1.6%
(5) Elastic Modulus = 250g/d (3,150kg/mm$^2$)

Thus, high-strength, high-elasticity liquid crystalline resin composite was obtained.

Then, the liquid crystalline resin composite was treated in air at 200 °C for 1 min, followed by solid-phase polymerization under the following conditions.

C. Conditions for Solid-Phase Polymerization

(1) Temperature:
1st step = 250 °C for 5 hours
2nd step = 270 °C for 5 hours
(2) Atmosphere:
Fiber in a relaxed state was treated in flowing nitrogen.

E. Characteristics of Resultant Liquid Crystalline Resin Moldings

(1) Fineness = about 1.9d
(2) Strength = 12.8g/d (161kg/mm$^2$)
(3) Elongation = 3.6%
(4) Elastic modulus = 290g/d (3,650kg/mm$^2$)

Being extremely high in chemical resistance, the liquid crystalline resin composite was resistant to hydrochloric acid and sodium hydroxide solution. After irradiation with 200 Mrad electron beam, the material showed a high strength retention rate of 85 percent. For comparison, the same test was carried out for fiber produced from polyethylene terephthalate. Its strength retention rate was 46 percent.

The melting point of the liquid crystalline component of the liquid crystalline resin composite was measured by a differential scanning calorimeter and found to have increased to 325 °C.

[Practical Example 6]

The liquid crystalline resin composite produced in Practical Example 1 was taken up on a roller, extended up to a fineness of 10,000 denier, heated in an oven at 280° C, and continuously passed through a die to form a gut-like string. The variation in the island/sea weight ratio of the string was about 0.8 percent. It was then cut into about 8mm chips, which was subjected to solid-phase polymerization by the same procedure as used in Practical Example 5. The melting point of the liquid crystalline resin component was found to have increased to 322° C. The chips were injection-molded through an extruder at 305° C. The injection molding was able to be performed smoothly.

[Practical Example 7]

A liquid crystalline resin composite was produced by the same procedure as in Practical Example 5 under the following conditions. No significant troubles occurred during the process.

A. Yarn-making

(1) Sea component: nylon 66 with relative viscosity of 3.4
(2) Island component: Same as in Practical Example 5
(3) Island/sea (weight ratio) = 80/20 (The variation in the island/sea weight ratio of the fiber was less than one percent.)
(4) Number of islands = 16
(5) Spinning temperature = 305° C
(6) Spinning rate = 1000m/min
(7) Extension rate: not extended

B. Characteristics of Resultant Liquid Crystalline Resin Composite

(1) Monofilament fineness of resultant fiber = 8d
(2) Strength = 7.8g/d (94kg/mm$^2$)
(3) Elongation = 2.3%
(5) Elastic Modulus = 333g/d
Specific gravity = 1.34

Thus, high-strength, high-elasticity liquid crystalline resin composite was obtained.

Then, the liquid crystalline resin composite was subjected to solid-phase polymerization at 250° C for six hours. The fiber in a relaxed state was treated in flowing nitrogen.

C. Characteristics of Resultant Liquid Crystalline Resin Moldings

(1) Fineness = about 8d
(2) Strength = 18.9g/d (228kg/mm$^2$)
(3) Elongation = 3.3%
(4) Elastic modulus = 597g/d (3,650kg/mm$^2$)

The liquid crystalline resin component had a number average molecular weight of about 53,000. The liquid crystalline resin composite was particularly suitable as material for tire code.

[Practical Example 8]

The following procedure was carried out to produce a liquid crystalline resin composite in which the island component comprises a liquid crystalline resin containing carbon black, with the sea component comprising the liquid crystalline resin alone. No significant troubles occurred during the process. Spinning was performed in nitrogen.

A. Yarn-Making

(1) Sea component: VECTRA A950 (same material as the island component in Practical Example 5)
(2) Island component: VECTRA A950 containing 30 weight percent carbon black
(3) Island/sea (weight ratio) = 50/50 (The variation in the island/sea weight ratio of the fiber was less than one percent.)
(4) Number of islands = 16
(5) Spinning temperature = 305° C
(6) Spinning rate = 500m/min
(7) Extension rate: not extended

B. Characteristics of Resultant Liquid Crystalline Resin Composite

(1) Monofilament fineness of the resultant fiber = 7d
(2) Strength 7.8g/d (98kg/mm$^2$)
(3) Elongation = 2.2%
(4) Specific electric resistance = 1.2 x 10Ω•cm
(5) Melting point of fiber: about 285° C
(6) Elastic modulus = 500g/d

In the electric condustive portion, the cross section of the fiber contains 16 continuous, electrically conductive striations. Thus, a high-strength, electrically conductive liquid crystalline resin composite was obtained. The liquid crystalline resin composite had a number average molecular weight of about 16,000.

Then, the liquid crystalline resin composite was treated in flowing nitrogen at 250° C for 40 hours. Fiber with the following characteristics was obtained.

(1) Monofilament fineness of resultant fiber = 7d
(2) Strength = 21.2g/d (267kg/mm$^2$)
(3) Elongation = 3.3%
(4) Specific electric resistance = 0.8 x 10Ω•cm
(5) Melting point of fiber: about 321° C
(6) Elastic modulus = 550g/d

Thus, high-strength, high-elasticity liquid crystalline resin composite which is high in electric conductivity and melting point was produced. The liquid crystalline resin composite had a number average molecular weight of about 60,000.

[Practical Example 9]

The following operations were carried out to produce a liquid crystalline resin composite by the same procedure in Practical Example 8. No significant troubles occurred during the process.

A. Yarn-making

(1) Sea component: A poliphenylene sulfide product supplied by Toray/Phillips Petroleum Co.
(2) Island component: VECTRA A950 (same as the sea component used in Practical Example 8)
(3) Coloring matter: A quinacridone pigment mainly of the following structure

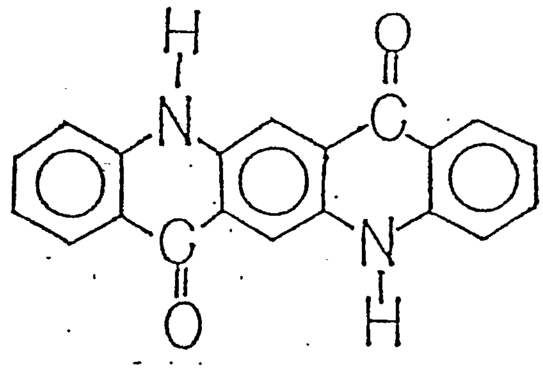

The pigment was added to both the sea and island component by using of a pelletizer. Both the pigment addition process and the pelletizer addition process were carried out in an nitrogen atmosphere. Its content was five weight percent in both the sea and island component.

(4) Island/sea (weight ratio) = 50/50 (The variation in the island/sea weight ratio of the fiber was less than one percent.)

(6) Number of islands = 36

(5) Spinning temperature = 305 °C

(6) Spinning rate = 600m/min

(7) Extension rate: not extended

For spinning, a heat insulating cylinder (without forced heating) was attached to the nozzle.

B. Characteristics of Resultant Liquid Crystalline Resin Composite

(1) Monofilament fineness of resultant fiber = 25d

(2) Strength = 5.2g/d

(3) Elongation = 2.3%

(4) Elastic modulus = 310g/d

(5) Coloration: The fiber was found to have been colored adequately. The fiber was fractured for observation, which showed that the liquid crystalline resin portion had been colored completely. The fiber was not discolored when immersed in trichlene.

Thus, high-strength, high-elasticity liquid crystalline resin composite which was colored adequately was obtained.

Then, the liqkuid crystalline resin composite was cut into about 1cm pieces. The liquid crystalline resin in the liquid crystalline resin composite had an aspect ratio of about 1,700. The liquid crystalline resin composite was dispersed in trichlene and scooped with a sieve to produce sheets with a METSUKE of about 200g/m$^2$. Five of the sheets were piled, put on a teflon sheet, and heated in an oven at 295 °C to melt mainly the polyphenylene sulfide component of the liquid crystalline resin composite. Thus, a sheet to which polyethylene was fusion-bonded was obtained. It was pressed in a press heated to 255 °C to produce a thin plate.

The plate was found to have been colored adequately. In particular, the plate was colored so uniformly that it was difficult to distinguish between the liquid crystalline resin portion and the non-liquid crystalline resin portion.

The plate was small in weight and high in strength, and had the following characteristics.

(1) Flexural strength = 26kg/mm$^2$

(2) Flexural modulus = 870kg/mm$^2$

(3) Izod impact strength = 10.2kg•cm/cm.

(4) Specific gravity = 1.3

[Practical Example 10]

VECTRA A950, the same liquid crystalline resin as used in Practical Example 9, was spinned at 310 °C to produce liquid crystalline fiber of 15d, as described below. Though no troubles took place in the process,

the maximum stable pinning rate was 100m/min at most for unidentified reasons.

Slurry-like material consisting of magnetic iron oxide dispersed in water was added to the liquid crystalline fiber in the ratio of 20 parts relative to the fiber. It was then dried and heat-treated in air at 200°C for 5 min, 270°C for 5 min and 370°C for 1 min. The resultant fiber had 14 percent iron oxide adhered over its surface. The fiber retained its shape at 400°C. It was also high in chemical resistance and flame retardance, with a strength of 7g/d and elongation of 2.1 percent (the fiber being virtually incombustible, let alone having a flame retardance meeting the V-0 criteria). Furthermore, the fiber underwent no deterioration when irradiated with light.

[Practical Example 11]

In taking up the fiber around a roller in Practical Example 10, potassium lauryl phosphate (5% solution) was used as lubricant in such a way that the fiber would be provided with three weight percent lubricant. Its addition was achieved satisfactorily. Then, the fiber was subjected to solid-phase polymerization under the following conditions. It was found possible to produce rapidly high-strength, high-elasticity liquid crystalline resin.

A. Conditions for solid-phase polymerization:

The fiber was wound round a pirn and treated in flowing nitrogen at 250°C and 270°C each for 0.5 hour.

B. Characteristics of Resultant Fiber

(1) Strength = 20.5g/d (8.2g/d)
(2) Elongation = 2.9% (2.1%)
(3) Elastic modulus = 650g/d (440g/d)

The figures in parentheses indicate the characteristics before solid-phase polymerization. Thus, solid-phase polymerization was achieved in a short period of time.

[Practical Example 12]

A liquid crystalline resin composite was produced by the same procedure as in Practical Example 7 under the following conditions. No significant troubles occurred during the process.

A. Yarn-making

(1) Sea component: nylon 66 with relative viscosity of 3.4
(2) Island component: the same as in Practical Example 5
(3) Island/sea (weight ratio) = 80/20 (The variation in the island/sea weight ratio of the fiber was less than one percent.)
(4) Number of islands = 16
(5) Spinning temperature = 305°C
(6) Spinning rate = 1000m/min
(7) Extension rate: not extended

B. Characteristics of Resultant Liquid Crystalline Resin Composite

(1) Monofilament fineness of resultant fiber = 8d
(2) Strength = 7.8g/d (94kg/mm$^2$)
(3) Elongation = 2.3%
(5) Elastic modulus = 333g/d Specific gravity = 1.34

At this stage, an organic phosphorus compound as given in Practical Example 11 was used in the take-up lubricant in the ratio of about one weight percent relative to the liquid crystalline resin composite.

Then, the liquid crystalline resin composite was subjected to solid-phase polymerization at 250 °C for two hours. The fiber, wound around a pirn, was treated in a flowing nitrogen atmosphere.

C. Characteristics of Resultant Liquid Crystalline Resin Composite

(1) Monofilament fineness of resultant fiber = about 8d
(2) Strength = 17.8g/d (202kg/mm$^2$)
(3) Elongation = 3.1%
(4) Elastic modulus = 635g/d

The liquid crystalline resin component had a number average molecular weight of about 51,000. The liquid crystalline resin composite was particularly suitable as material for tire code. Thus, rapid production of a high-strength, high-elasticity liquid crystalline resin composite was achieved.

[Practical Example 13]

Slurry material consisting of fine particles of magnetic iron oxide dispersed in water was added to the liquid crystalline resin composite in the ratio of 25 parts relative to the liquid crystalline fiber. The composite was dried, heat-treated at 270 °C for one 1 min, and further heated in such a way that the temperature reaches 340 °C in 3 min, followed by heating at 340 °C for 1 min. All heat treatment was performed in air. The liquid crystalline resin composite retained its shape at 400 °C. When fired, it burned, but had self-extinguishing properties and did not melt. Thus, an infusible liquid crystalline resin composite was obtained.

[Practical Example 14]

The following operations were carried out to produce a liquid crystalline resin composite of the polymer array structure in which the sea component comprises a thermoplastic fluoropolymer. No significant troubles took place during the process.

A. Yarn-making conditions

(1) Sea component: A tetrafluoroethylene/ethylene copolymer (Type E520) supplied by Daikin Chemical Industries, Ltd.
(2) Island component: VECTRA Type A950
(3) Island/sea = 50/50 (weight ratio) (The variation in the island/sea weight ratio of the fiber was less than one percent.)
(4) Number of islands = 70
(5) Spinning temperature = 315 °C
(6) Spinning rate = 150m/min
(7) Extension rate: not extended

B. Characteristics of Resultant Liquid Crystalline Resin Composite

(1) Monofilament fineness of resultant fiber = 10 d
(2) Strength = 4.1g/d (66kg/mm$^2$)
(3) Elongation = 2.1%
(4) Elastic modulus = 220g/d (3.5t/mm$^2$)

The TLCP had a number average molecular weight of about 16,000.

Thus, a high-strength, high-elasticity liquid crystalline resin composite consisting of a fluoropolymer and a liquid crystalline resin was produced.

Then, the liquid crystalline resin composite was heat-treated in flowing nitrogen at 250 °C for 10 hours. A liquid crystalline resin with the following characteristics was obtained.

(1) Fineness of liquid crystalline resin composite = 10d
(2) Strength = 10.3g/d (166kg/mm$^2$)

(3) Elongation = 3.2%

(4) Elastic modulus = 340g/d (5.5t/$mm^2$)

The liquid crystalline resin had a number average molecular weight of about 58,000.

Thus, a high-strength, high-elasticity liquid crystalline resin composite consisting of a fluoropolymer and a liquid crystalline resin was produced. DSC measurement showed that the liquid crystalline resin component had a melting point of 312° C.

[Practical Example 15]

Fiber was produced by a procedure which is the same as that used in Practical Example 14 except that the island/sea ratio was changed to 80/20. Then, solid-phase polymerization was carried out by the same procedure as used in Practical Example 2. A fluoropolymer composite with a very high strength of 14.2g/d was obtained.

[Practical Example 16]

The liquid crystalline resin composite produced through solid-phase polymerization in Practical Example 14 was heated in an oven at 320° C, and passed through a die of 280° C to produce a gut-like string, which was cut into about 1cm chips. The chips were treated in flowing nitrogen at 250° C for 20 hours. The chips were then passed through an extruder of 325° C to form a plate with a thickness of about 2mm. The plate was about eight times as high in flexural strength and about 12 times as high in Izod impact strength as a similar plate made up only of the fluoropolymer. DSC measurement demonstrated that the liquid crystalline resin in the plate had become infusible.

## Claims

1. High-strength liquid crystalline resin moldings which comprise a liquid crystalline polyester resin whose backbone contains such a mesogenic group as described below, and which are 0.29$m^2$/g or more in specific surface area and 63kg/$mm^2$ or more in strength.

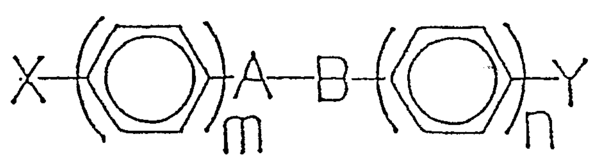

where X and Y represent such end groups as alkyl, alkoxy and cyano, and A-B denotes one of the following units.

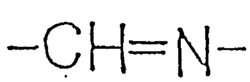

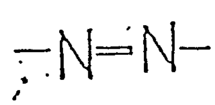

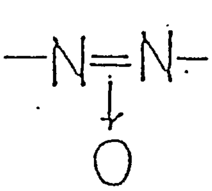

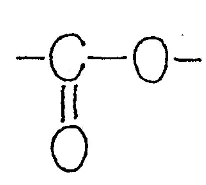

2. High-strength liquid crystalline resin moldings as proposed in Claim 1 which are 189kg/$mm^2$ or more in strength.

3. High-strength liquid crystalline resin moldings as proposed in Claims 1 and 2 which are in the form of very fine fiber with a fineness of one denier or less.

4. Liquid crystalline resin composites which are in the form of a resin composite consisting of at least a thermoplastic liquid crystalline resin and a non-liquid crystalline resin, with the thermoplastic liquid

crystalline resin having a fibrous structure and being contained in the non-liquid crystalline resin.

5. Liquid crystalline resin composites as proposed in Claim 4 in which the fibrous liquid crystalline resin in the liquid crystalline resin composites is 10μ or less in diameter and 10 or more in aspect ratio.

6. Liquid crystalline resin composites as proposed in either claim 4 and Claim 5 which are in a fibrous form.

7. Liquid crystalline resin composites as proposed in any of Claims 4-6 which are in the form of chips.

8. Liquid crystalline resin composites as proposed in any of Claims 4-7 whose cross section contains six or more liquid crystalline resin fibers.

9. Liquid crystalline resin composites as proposed in any of Claims 4-8 which are in the form of fiber and/or chips, with the variation in the weight ratio between the liquid crystalline resin and the non-liquid crystalline resin being 10 percent or less in any cross section of the liquid crystalline resin composite.

10. Liquid crystalline resin composites as proposed in any of Claims 4-9 in which the liquid crystalline resin is either a liquid crystalline polyester or a liquid crystalline polyester amide.

11. Liquid crystalline resin composites as proposed in any of Claims 4-10 in which the termoplastic non-liquid crystalline resins include at least one of the following. (A) thermoplastic nylon, (a) thermoplastic polyester, (C) thermoplastic fluoropolymer, (D) thermoplastic sulfur-containing aromatic polymer, (E) thermoplastic aromatic ether-ketone, (F) thermoplastic ether resin, (G) polypropylene.

12. Liquid crystalline resin composites as proposed in any of Claims 4-11 which have a tensile strength of $35kg/mm^2$ or more.

13. Liquid crystalline resin composites as proposed in any of Claims 4-12 in which the melting point of the liquid crystalline resin is higher by 20°C or more than that of the thermoplastic non-liquid crystalline resin.

14. Liquid crystalline resin moldings and/or liquid crystalline resin composites as proposed in any of Claims 1-13 in which the liquid crystalline resin is infusible.

15. Liquid crystalline resin composites as proposed in any of Claims 4-14 in which at least the non-liquid crystalline resin is infusible.

16. Liquid crystalline resin moldings and/or liquid crystalline resin composites as proposed in any of Claims 1-15 in which the liquid crystalline resin has a number 1 average molecular weight of 30,000 or more.

17. Liquid crystalline resin moldings and/or liquid crystalline resin composites as proposed in any of Claims 1-16 in which the liquid crystalline resin is colored with a pigment or the non-liquid crystalline resin is colored.

18. Highly electrically conductive liquid crystalline resin moldings and/or liquid crystalline resin composites as proposed in any of Claims 1-19 which contain and/or carry on their surface an electrically conductive substance, and have a specific electric resistance of 10Ω•cm or less.

19. Liquid crystalline resin composite producing methods in which several streams of a liquid crystalline resin (core component) are combined while supplying an intermediate material (intermediate component) to between the streams to produce a multicore composite flow, followed by melt-molding.

20. Methods as proposed in Claim 19 in which the multicore composite flow is a sea-island composite flow.

21. Methods as proposed in Claim 20 in which the intermediate material is used as sheath to produce many core-sheath streams, which are then combined into a sea-island composite flow.

22. Methods for liquid crystalline resin moldings with a large specific surface area of $0.29m^2/g$ or more in which several streams of a liquid crystalline resin (core component) are combined while supplying an intermediate component to between them to produce a multicore composite flow, followed by melt-molding and subsequent removal of the intermediate component.

23. High-strength liquid crystalline resin moldings producing methods in which liquid crystalline resin moldings with a specific surface area of $0.29m^2/g$ or more are heated in a vacuum or a flowing inert gas at a temperature equal to or higher than the glass transition temperature of the liquid crystalline resin.

24. High-strength liquid crystalline resin composite producing methods in which a liquid crystalline resin composite is heated in a vacuum or a flowing inert gas at a temperature equal to or higher than the glass transition temperature of the liquid crystalline resin.

25. High-strength liquid crystalline resin moldings producing methods in which organic phosphorus compounds as described below are adhered to the surface of liquid crystalline resin moldings and/or a liquid crystalline resin composite, followed by heating in a vacuum or a flowing inert gas at a temperature equal to or higher than the glass transition temperature of the liquid crystalline resin.

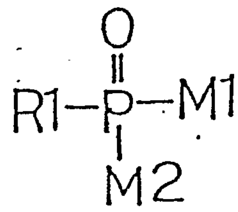

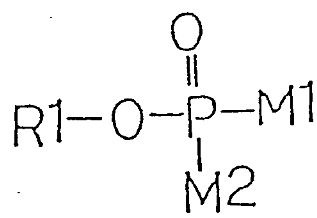

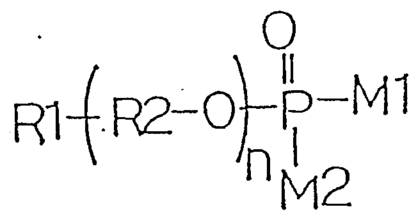

where R1 and R2 represent a hydrocarbon, M1 an alkali metal, and M2 one of the following: (a) alkali metal, (b) hydrogen, (c) hydrocarbon, and (d) oxygen-containing hydrocarbon. In the above formulae, n denotes an integer equal to or greater than one.

26. Methods for producing infusible liquid crystalline resin moldings and/or liquid crystalline resin composites in which liquid crystalline resin moldings and/or liquid crystalline resin containing and/or carrying on their surface five weight percent or more fine particles of at least one metallic compound comprising iron, chrome or cobalt.

# INTERNATIONAL SEARCH REPORT

International Application No PCT/JP 88/01001

**I. CLASSIFICATION OF SUBJECT MATTER** (if several classification symbols apply, indicate all) [6]

According to International Patent Classification (IPC) or to both National Classification and IPC

Int. $Cl^4$ D01F6/62, 6/84, 8/10, 8/14, 8/16, C08J5/00

**II. FIELDS SEARCHED**

Minimum Documentation Searched [7]

| Classification System | Classification Symbols |
|---|---|
| IPC | D01F6/62, 6/84, 8/10, 8/14, 8/16<br>C08J5/00 |

Documentation Searched other than Minimum Documentation to the Extent that such Documents are Included in the Fields Searched [8]

Jitsuyo Shinan Koho 1926 - 1988
Kokai Jitsuyo Shinan Koho 1971 - 1988

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 61-160421 (Sumitomo Chemical Co., Ltd., Japan Exlan Co., Ltd.) 21 July 1986 (21. 07. 86) (Family : none) | 1-6, 8-14, 16 |
| X | JP, A, 57-101020 (Asahi Chemical Industry Co., Ltd.) 23 June 1982 (23. 06. 82) (Family : none) | 4-6,8-14, 16 |
| X | JP, A, 57-101021 (Asahi Chemical Industry Co., Ltd.) 23 June 1982 (23. 06. 82) (Family : none) | 4-6,8-14, 16 |
| X | JP, A, 57-11211 (Imperial Chemical Industries Ltd.) 20 January 1982 (20. 01. 82) & US, A, 4,442,057 | 4-6,8-14, 16 |
| Y | JP, A, 61-160421 (Sumitomo Chemical Co., Ltd., Japan Exlan Co., Ltd.) 21 July 1986 (21. 07. 86) (Family : none) | 7,15,17, 18 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 13, 1988 (13. 10. 88) | October 24, 1988 (24. 10. 88) |
| **International Searching Authority** | **Signature of Authorized Officer** |
| Japanese Patent Office | |

International Application No. PCT/JP 88/01001

**FURTHER INFORMATION CONTINUED FROM THE SECOND SHEET**

| | | |
|---|---|---|
| Y | JP, A, 57-101020 (Asahi Chemical Industry Co., Ltd.) 23 June 1982 (23. 06. 82) (Family : none) | 7,15, 17-24,19-22 |
| Y | JP, A, 57-101021 (Asahi Chemical Industry Co., Ltd.) 23 June 1982 (23. 06. 82) (Family : none) | 7,15,17-24, 19-22 |
| Y | JP, A, 57-11211 (Imperial Chemical Industries Ltd.) 20 January 1982 (20. 01. 82) & US, A, 4,442,057 | 7,15,17-24, 19-22 |
| Y | JP, A, 61-231218 (Sumitomo Chemical Co., Ltd. Japan Exlan Co., Ltd.) | 15,23,24 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers........... because they relate to subject matter [12] not required to be searched by this Authority, namely:

2.☐ Claim numbers........... because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP 88/01001

FURTHER INFORMATION CONTINUED FROM THE SECOND SHEET

| | | |
|---|---|---|
| | 15 October 1986 (15. 10. 86) & EP, A, 200012 | |
| Y | JP, A, 54-77691 (Celanese Corp.) 21 June 1979 (21. 06. 79) & US, A, 4,161,470 | 15,23,24 |
| Y | JP, A, 59-36722 (Toray Industries, Inc.) 29 February 1984 (29. 02. 84) (Family : none) | 19-22 |
| A | JP, A, 61-231218 (Sumitomo Chemical Co., Ltd., Japan Exlan Co., Ltd.) 15 October 1986 (15. 10. 86) & EP, A, 200012 | 25,26 |

V. ☐ OBSERVATIONS WHERE CERTAIN CLAIMS WERE FOUND UNSEARCHABLE [10]

This international search report has not been established in respect of certain claims under Article 17(2) (a) for the following reasons:

1. ☐ Claim numbers............ because they relate to subject matter [12] not required to be searched by this Authority, namely:

2. ☐ Claim numbers............ because they relate to parts of the international application that do not comply with the prescribed requirements to such an extent that no meaningful international search can be carried out [13], specifically:

VI. ☐ OBSERVATIONS WHERE UNITY OF INVENTION IS LACKING [11]

This International Searching Authority found multiple inventions in this international application as follows:

1. ☐ As all required additional search fees were timely paid by the applicant, this international search report covers all searchable claims of the international application.
2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP 88/01001

| FURTHER INFORMATION CONTINUED FROM THE SECOND SHEET | | |
|---|---|---|
| A | JP, A, 54-77691 (Celanese Corp.) 21 June 1979 (21. 06. 79) & US, A, 4,161,470 | 25,26 |

**V. ☐ OBSERVATIONS WHERE CERTAIN CLAIMS WERE FOUND UNSEARCHABLE[10]**

This international search report has not been established in respect of certain claims under Article 17(2) (a) for the following reasons:

1.☐ Claim numbers........., because they relate to subject matter[12] not required to be searched by this Authority, namely:

2.☐ Claim numbers........., because they relate to parts of the international application that do not comply with the prescribed requirements to such an extent that no meaningful international search can be carried out[13], specifically:

**VI.☐ OBSERVATIONS WHERE UNITY OF INVENTION IS LACKING[11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.